# EUROPEAN PATENT APPLICATION

(11) **EP 4 518 361 A1**
(43) Date of publication of application: **05.03.2025**
(21) Application number: 23795546.3
(22) Date of filing: 27.04.2023
(51) Int. Cl.: H04W 4/02

(54) **POSITIONING METHOD, APPARATUS, TERMINAL, AND NETWORK DEVICE**

(30) Priority: 29.04.2022 CN 202210476497
(71) Applicant: Datang Mobile Communications Equipment Co., Ltd., Beijing 100085 (CN)
(72) Inventor: LI, Hui, Beijing 100085 (CN); REN, Xiaotao, Beijing 100085 (CN); REN, Bin, Beijing 100085 (CN); DA, Ren, Beijing 100085 (CN)
(74) Representative: Studio Torta S.p.A.
(86) International application number: PCT/CN2023/091168
(87) International publication number: WO 2023/208114

(57) **Abstract**

A positioning method, a positioning apparatus, a terminal and a network device are provided. The method includes: sending a trigger signaling to at least one first device, wherein the trigger signaling includes one or more of followings: a first trigger signaling, used to instruct the first terminal to send a first SL-PRS, and/or used to instruct the at least one first device to receive the first SL-PRS and report first measurement information corresponding to the first SL-PRS; a second trigger signaling, used to instruct the at least one first device to send a second SL-PRS; and performing measurement positioning according to the sent trigger signaling.

## Description

### CROSS-REFERENCE TO RELATED APPLICATION

The present application claims a priority to the Chinese patent application No. 202210476497.9 filed in China on April 29, 2022, a disclosure of which is incorporated herein by reference in its entirety.

### TECHNICAL FIELD

The present disclosure relates to the field of communications technology, and in particular, to a positioning method, and a positioning apparatus, terminal and network device.

### BACKGROUND

In a New Radio (NR) system, a respective positioning measurement value is defined for each type of positioning technology. For downlink positioning technology, a User Equipment (UE, also known as a terminal device) measures a Downlink Positioning Reference Signal (DL PRS) to obtain and report a positioning measurement value. For uplink positioning technology, a base station (gNB) measures an Uplink Positioning Reference Signal (UL SRS) to obtain and report a positioning measurement value.

The above positioning method is based on a Uu interface. Since a position of the base station is known, absolute positioning of the terminal device can be achieved.

However, in an application scenario of a Sidelink (SL), a position of a vehicle is unknown. In the absence of both a network coverage and a global positioning system (GPS) signal, a relative position relationship between vehicles cannot be obtained, and the known positioning method cannot be used for positioning. In addition, when there is the network coverage, the positioning between the terminals on the sidelink also cannot be used to further improve absolute positioning accuracy.

### SUMMARY

An object of the present disclosure is to provide a positioning method, an apparatus, a terminal and a network device, so as to solve a problem that the terminal cannot be positioned through the positioning method in the related art in a Sidelink application scenario without the network coverage and Global Positioning System (GPS) signal support.

An embodiment of the present disclosure provides a positioning method, which is performed by a first terminal and includes:
sending a trigger signaling to at least one first device, wherein the trigger signaling includes one or more of followings:
a first trigger signaling, used to instruct the first terminal to send a first Sidelink Positioning Reference Signal (SL-PRS), and/or used to instruct the at least one first device to receive the first SL-PRS and report first measurement information corresponding to the first SL-PRS;
a second trigger signaling, used to instruct the at least one first device to send a second SL-PRS;
performing measurement positioning according to the sent trigger signaling.

Optionally, in the positioning method, in the case that the trigger signaling includes the first trigger signaling, the method further includes:
sending the first SL-PRS to the at least one first device according to the first trigger signaling;
receiving the first measurement information reported by the at least one first device after measuring the first SL-PRS.

Optionally, in the positioning method, in the case that the trigger signaling includes the second trigger signaling, the method further includes:
receiving the second SL-PRS sent by the at least one first device;
obtaining second measurement information by measuring the second SL-PRS.

Optionally, in the positioning method, the performing the measurement positioning according to the sent trigger signaling includes:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

Optionally, in the positioning method, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the positioning method, the second measurement information includes one or more of following information:
an AOA of the second SL-PRS;
time difference between time for sending the first SL-PRS and time for receiving the second SL-PRS;
time difference between times for receiving the second SL-PRS by respective different antenna panels.

Optionally, before sending the trigger signaling, the positioning method further includes:
sending a positioning request message to the at least one first device;
receiving a positioning response message sent by the at least one first device.

Optionally, in the positioning method, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the positioning method, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the positioning method, the positioning request message includes one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

Optionally, in the positioning method, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, after performing the measurement positioning, the positioning method further includes:
obtaining relative position information between the first terminal and the at least one first device;
reporting the relative position information to the at least one first device and/or a positioning server.

Optionally, the positioning method further includes:
performing Downlink Positioning Reference Signal (DL-PRS) measurement according to first indication information sent by a positioning server, to obtain third measurement information;
reporting the third measurement information and the first measurement information to the positioning server; or reporting the third measurement information and the second measurement information to the positioning server.

Optionally, the positioning method further includes:
performing Downlink Positioning Reference Signal (DL-PRS) measurement according to first indication information sent by a positioning server, to obtain third measurement information;
obtaining an absolute position of the first terminal according to an absolute position of at least one network device and the third measurement information;
reporting the absolute position of the first terminal to the positioning server.

Optionally, the positioning method further includes:
sending a Sounding Reference Signal (SRS) according to a third trigger signaling of a network device;
acquiring fourth measurement information, wherein the fourth measurement information is obtained by the network device through measuring the SRS;
obtaining an absolute position of the first terminal according to the fourth measurement information and an absolute position of the network device.

Optionally, the positioning method further includes:
receiving resource configuration information of the first SL-PRS and/or resource configuration information of the second SL-PRS sent by a positioning server.

Optionally, in the case that the at least one first device includes a Road Side Unit (RSU), the method further includes:
receiving position information sent by the RSU;
after performing the measurement positioning according to the trigger signaling, the positioning method further includes:
   determining an absolute position of the first terminal according to a positioning result of the measurement positioning.

Optionally, the positioning method further includes:
sending a deactivation signaling to the at least one first device;
wherein in the case that the trigger signaling includes the first trigger signaling, the deactivation signaling is used to deactivate transmission of the first SL-PRS;
in the case that the trigger signaling includes the second trigger signaling, the deactivation signaling is used to deactivate transmission of the second SL-PRS.

An embodiment of the present disclosure also provides a positioning method, which is performed by a first terminal and includes:
receiving a trigger signaling sent by a first terminal, wherein the trigger signaling includes one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

Optionally, in the case that the trigger signaling includes the first trigger signaling, the method further includes:
receiving the first SL-PRS sent by the first terminal;
reporting the first measurement information to the first terminal and/or a positioning server after measuring the first SL-PRS.

Optionally, in the case that the trigger signaling includes the second trigger signaling, the method further includes:
sending the second SL-PRS to the first terminal according to the second trigger signaling.

Optionally, in the positioning method, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, before receiving the trigger signaling, the positioning method further includes:
receiving a positioning request message sent by the first terminal;
sending a positioning response message to the first terminal according to the positioning request message.

Optionally, the positioning method further includes:
obtaining relative position information sent by the first terminal, wherein the relative position information indicates a relative position between the first terminal and the at least one first device.

Optionally, the positioning method further includes:
receiving resource configuration information of the first SL-PRS and/or resource configuration information of the second SL-PRS sent by a positioning server.

Optionally, in the case that the first device is a Road Side Unit (RSU), the positioning method further includes:
sending position information of the RSU to the first terminal.

An embodiment of the present disclosure also provides a terminal, which is a first terminal and includes a memory, a transceiver, and a processor;
wherein the memory is configured to store a computer program; the transceiver is configured to receive and send data under the control of the processor; the processor is configured to read the computer program in the memory to perform the following operations:
sending a trigger signaling to at least one first device, wherein the trigger signaling includes one or more of followings:
a first trigger signaling, used to instruct the first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
performing measurement positioning according to the sent trigger signaling.

Optionally, in the case that the trigger signaling includes the first trigger signaling, the processor is further configured to:
send the first SL-PRS to the at least one first device according to the first trigger signaling;
receive the first measurement information reported by the at least one first device after measuring the first SL-PRS.

Optionally, in the case that the trigger signaling includes the second trigger signaling, the processor is further configured to:
receive the second SL-PRS sent by the at least one first device;
obtain second measurement information by measuring the second SL-PRS.

Optionally, the processor performing the measurement positioning according to the sent trigger signaling includes:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

Optionally, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, the second measurement information includes one or more of following information:
an AOA of the second SL-PRS;
time difference between time for sending the first SL-PRS and time for receiving the second SL-PRS;
time difference between times for receiving the second SL-PRS by respective different antenna panels.

Optionally, before sending the trigger signaling, the processor is further configured to:
send a positioning request message to the at least one first device;
receive a positioning response message sent by the at least one first device.

Optionally, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, the positioning request message includes one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

Optionally, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, after performing the measurement positioning, the processor is further configured to:
obtain relative position information between the first terminal and the at least one first device;
report the relative position information to the at least one first device and/or a positioning server.

Optionally, the processor is further configured to:
perform Downlink Positioning Reference Signal (DL-PRS) measurement according to first indication information sent by a positioning server, to obtain third measurement information;
report the third measurement information and the first measurement information to the positioning server; or report the third measurement information and the second measurement information to the positioning server.

Optionally, the processor is further configured to:
receive second indication information sent by the positioning server; the second indication information includes one or more of following information:
an absolute position of the first terminal;
an absolute position of the at least one first device;
a relative position between the first terminal and the at least one first device.

Optionally, the processor is further configured to:
perform Downlink Positioning Reference Signal (DL-PRS) measurement according to first indication information sent by a positioning server, to obtain third measurement information;
obtain an absolute position of the first terminal according to an absolute position of at least one network device and the third measurement information;
report the absolute position of the first terminal to the positioning server.

Optionally, the processor is further configured to:
send a Sounding Reference Signal (SRS) according to a third trigger signaling of a network device;
acquire fourth measurement information, wherein the fourth measurement information is obtained by the network device through measuring the SRS;
obtain an absolute position of the first terminal according to the fourth measurement information and an absolute position of the network device.

Optionally, the processor is further configured to:
receive resource configuration information of the first SL-PRS and/or resource configuration information of the second SL-PRS sent by a positioning server.

Optionally, in the case that the at least one first device includes a Road Side Unit (RSU), the processor is further configured to:
receive position information sent by the RSU;
after performing the measurement positioning according to the trigger signaling, the processor is further configured to:
   determine an absolute position of the first terminal according to a positioning result of the measurement positioning.

Optionally, the processor is further configured to:
send a deactivation signaling to the at least one first device;
wherein in the case that the trigger signaling includes the first trigger signaling, the deactivation signaling is used to deactivate transmission of the first SL-PRS;
in the case that the trigger signaling includes the second trigger signaling, the deactivation signaling is used to deactivate transmission of the second SL-PRS.

An embodiment of the present disclosure also provides a network device, which is a first device and includes a memory, a transceiver, and a processor;
wherein the memory is configured to store a computer program; the transceiver is configured to receive and send data under the control of the processor; the processor is configured to read the computer program in the memory and perform the following operations:
receiving a trigger signaling sent by a first terminal, wherein the trigger signaling includes one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

Optionally, in the case that the trigger signaling includes the first trigger signaling, the processor is further configured to:
receive the first SL-PRS sent by the first terminal;
report the first measurement information to the first terminal and/or a positioning server after measuring the first SL-PRS.

Optionally, in the case that the trigger signaling includes the second trigger signaling, the processor is further configured to:
send the second SL-PRS to the first terminal according to the second trigger signaling.

Optionally, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, before receiving the trigger signaling, the processor is further configured to:
receive a positioning request message sent by the first terminal;
send a positioning response message to the first terminal according to the positioning request message.

Optionally, the processor is further configured to:
obtain relative position information sent by the first terminal, wherein the relative position information indicates a relative position between the first terminal and the at least one first device.

Optionally, the processor is further configured to:
receive second indication information sent by the positioning server; the second indication information includes one or more of following information:
an absolute position of the first terminal;
an absolute position of the first device;
a relative position between the first terminal and the first device.

Optionally, the processor is further configured to:
receive resource configuration information of the first SL-PRS and/or resource configuration information of the second SL-PRS sent by a positioning server.

Optionally, in the case that the first device is a Road Side Unit (RSU), the processor is further configured to:
send position information of the RSU to the first terminal.

An embodiment of the present disclosure also provides a positioning apparatus, which is applied to a first terminal and includes:
a first sending module, configured to send a trigger signaling to at least one first device, the trigger signaling including one or more of followings:
a first trigger signaling, used to instruct a first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
a first processing module, configured to perform measurement positioning according to the sent trigger signaling.

An embodiment of the present disclosure also provides a positioning apparatus, which is applied to a first device, and includes:
a second processing module, configured to receive a trigger signaling sent by a first terminal, the trigger signaling including one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

An embodiment of the present disclosure also provides a processor-readable storage medium storing therein a computer program, wherein the computer program is used to cause a processor to execute any one of the methods described above.

The beneficial effects of the above technical solution of the present disclosure are as follows:
in the positioning methods described in the embodiments of the present disclosure, the first terminal sends a trigger signaling, to enable the transmission and the measurement of the Sidelink Positioning Reference Signal (SL-PRS) between the first terminal and at least one first device, and perform positioning measurement between the first terminal and the at least one first device by using the measurement information obtained by measuring the SL-PRS, so as to achieve the positioning between the first terminal and the at least one first device in the scenario without the network coverage, and solve a problem that the terminal cannot be positioned without the network coverage and the GPS signal support.

### BRIEF DESCRIPTION OF THE DRAWINGS

Fig. 1 is a structure schematic diagram of a wireless communication system according to an embodiment of the present disclosure;
Fig. 2 is a flowchart of a positioning method according to a first embodiment of the present disclosure;
Fig. 3 is a schematic diagram of the implementation of a positioning method according to an embodiment of the present disclosure;
Fig. 4 is a schematic diagram of an application system of a positioning method according to the first embodiment of the present disclosure;
Fig. 5 is another schematic diagram of the implementation of a positioning method according to an embodiment of the present disclosure;
Fig. 6 is another schematic diagram of an application system of a positioning method according to the first embodiment of the present disclosure;
Fig. 7 is yet another schematic diagram of the implementation of a positioning method according to an embodiment of the present disclosure;
Fig. 8 is yet another schematic diagram of an application system of a positioning method according to the first embodiment of the present disclosure;
Fig. 9 is still yet another schematic diagram of the implementation of a positioning method according to an embodiment of the present disclosure;
Fig. 10 is still yet another schematic diagram of an application system of a positioning method according to the first embodiment of the present disclosure;
Fig. 11 is still yet another schematic diagram of an application system of a positioning method according to an embodiment of the present disclosure;
Fig. 12 is still yet another schematic diagram of the implementation of a positioning method according to an embodiment of the present disclosure;
Fig. 13 is still yet another schematic diagram of the implementation of a positioning method according to an embodiment of the present disclosure;
Fig. 14 is a flowchart of a positioning method according to the second embodiment of the present disclosure;
Fig. 15 is a flowchart of a positioning method according to the third embodiment of the present disclosure;
Fig. 16 is a flowchart of a positioning method according to the fourth embodiment of the present disclosure;
Fig. 17 is a structural diagram of a terminal according to an embodiment of the present disclosure;
Fig. 18 is a structural diagram of a network device according to an embodiment of the present disclosure;
Fig. 19 is a structural diagram of a positioning server according to an embodiment of the present disclosure;
Fig. 20 is another structural diagram of a terminal according to an embodiment of the present disclosure;
Fig. 21 is a structural diagram of a positioning apparatus according to an embodiment of the present disclosure;
Fig. 22 is another structural diagram of a positioning apparatus according to an embodiment of the present disclosure;
Fig. 23 is yet another structural diagram of a positioning apparatus according to an embodiment of the present disclosure;
Fig. 24 is still yet another structural diagram of a positioning apparatus according to an embodiment of the present disclosure.

### DETAILED DESCRIPTION

The technical solutions in the embodiments of the present disclosure will be clearly and thoroughly described below with reference to the accompanying drawings in the embodiments of the present disclosure. Obviously, the described embodiments are only some of the embodiments of the present disclosure, rather than all of them. Based on the embodiments in this disclosure, all other embodiments obtained by those of ordinary skill in the art without making creative efforts fall within the scope of this disclosure.

In the embodiments of this disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of this disclosure, the term "plurality" refers to two or more than two, and other quantifiers are similar to it.

The technical solutions provided by the embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

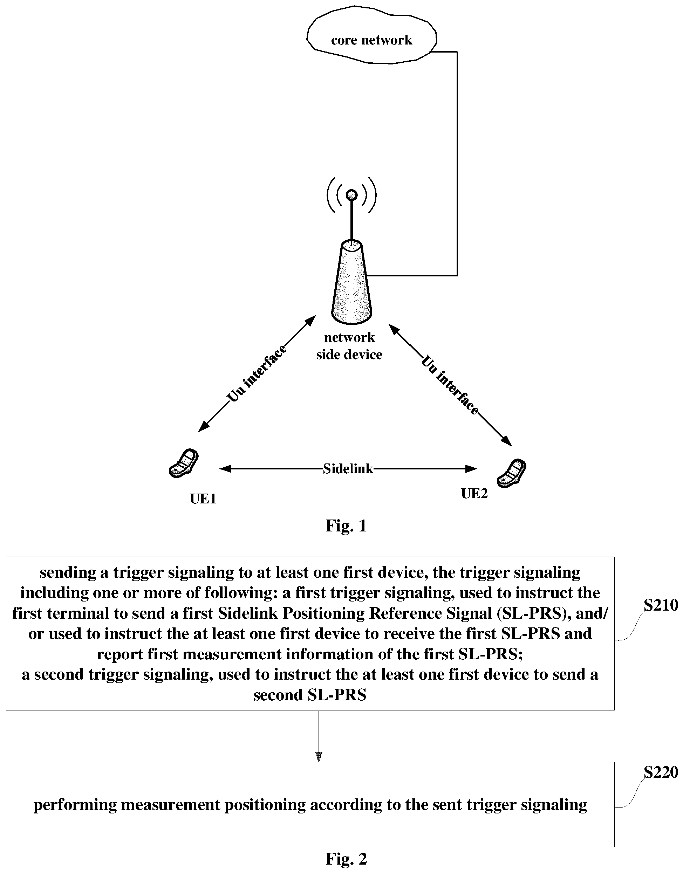

Fig. 1 illustrates a block diagram of a wireless communication system to which the positioning method according to an embodiment of the present disclosure may be applied. The wireless communication system includes terminal devices and a network side device. The terminal devices include UE1 and UE2; the network side device transmits data with the UE1 and the UE2 through a Uu interface. The UE1 and the UE2 can transmit data through a Sidelink in a short range. The radio interface corresponding to the Sidelink is called a Sidelink interface.

Currently, the New Radion (NR) technology includes downlink positioning technology, uplink positioning technology, and uplink-downlink hybrid positioning technology. The downlink positioning technology of the NR includes NR Downlink-Time Difference Of Arrival (DL-TDOA) and NR Downlink-Angle of Departure (DL-AoD); the uplink positioning technology includes NR UL-TDOA and NR UL-AoA; the uplink-downlink hybrid positioning technology includes NR Multiple-Round Trip Time (Multi-RTT). Corresponding positioning measurement values are defined for each positioning technology respectively. For the downlink positioning technology, a UE measures a downlink positioning reference signal (DL PRS) to obtain the positioning measurement value and reports it. For the uplink positioning technology, a gNB measures an uplink sounding reference signal (UL SRS) to obtain the positioning measurement value and reports it.

Any one of the above positioning technologies is based on the Uu interface and utilizes the principle that the positions of multiple base stations are known and the multiple base stations are used for locating one UE, thereby achieving absolute positioning of the UE. However, in a Sidelink-based application scenario, since a position of the vehicle is unknown, the relative position relationship between vehicles cannot be obtained in the absence of the network coverage and the GPS signal, and thus the known positioning method cannot be used for positioning.

To solve the above technical problems, an embodiment of the present disclosure provides a positioning method. A first terminal sends a triggering signaling, to enable the transmission and measurement of the Sidelink Positioning Reference Signal (SL-PRS) between the first terminal and at least one first device. The measurement information obtained by measuring the SL-PRS can be used for the positioning between the first terminal and the at least one first device, achieving the positioning between the first terminal and the at least one first device in the scenario without the network coverage.

In an embodiment of the present disclosure, a positioning method is performed by a first terminal, and as shown in Fig. 2, includes:
Step S210: sending a trigger signaling to at least one first device, wherein the trigger signaling includes one or more of followings:
   a first trigger signaling, used to instruct the first terminal to send a first Sidelink Positioning Reference Signal (SL-PRS), and/or used to instruct the at least one first device to receive the first SL-PRS and report first measurement information of the first SL-PRS;
   a second trigger signaling, used to instruct the at least one first device to send a second SL-PRS;
Step S220: performing measurement positioning according to the sent trigger signaling.

Optionally, the at least one first device includes at least one second terminal and/or at least one Road Side Unit (Road Side Unit). Optionally, the first terminal and the second terminal may be vehicle-mounted terminals.

In the embodiment of the present disclosure, data is transmitted between the first terminal and the at least one first device through a Sidelink.

According to the positioning method described in the embodiment of the present disclosure, in an implementation, a first terminal sends a first trigger signaling to at least one first device to instruct the first terminal to send a first SL-PRS to the at least one first device, and/or to instruct the at least one first device to receive the first SL-PRS and report first measurement information of the first SL-PRS. Based on the sent first trigger signaling, the first terminal sends the first SL-PRS to the at least one first device and receives the first measurement information reported by the at least one first device after measuring the first SL-PRS, enabling the first terminal to perform the positioning measurement according to the received first measurement information.

In another implementation, the first terminal sends a second trigger signaling to at least one first device to instruct the at least one first device to send the second SL-PRS. This enables the at least one first device to send the second SL-PRS, allowing the first terminal to perform measurement positioning according to the second measurement information obtained by measuring the second SL-PRS.

According to the positioning method described in the embodiment of the present disclosure, the first terminal can enable the transmission and measurement of the SL-PRS between the first terminal and the at least one first device by sending the first trigger signaling and/or the second trigger signaling. The first terminal can use the measurement information obtained by measuring the SL-PRS to perform the measurement positioning between the first terminal and the at least one first device, achieving the positioning between the first terminal and the at least one first device in the scenario without the network coverage.

In a positioning method described in an embodiment of the present disclosure, in an implementation, optionally, in the case that the trigger signaling includes the first trigger signaling, the method further includes:
sending the first SL-PRS to the at least one first device according to the first trigger signaling;
receiving first measurement information reported by the at least one first device after measuring the first SL-PRS.

In a positioning method described in an embodiment of the present disclosure, in an implementation, optionally, in the case that the trigger signaling includes the second trigger signaling, the method further includes:
receiving the second SL-PRS sent by the at least one first device;
obtaining second measurement information by measuring the second SL-PRS.

Optionally, the first trigger signaling and the second trigger signaling can be sent through a control channel or a broadcast channel respectively.

In the step S220, performing the measurement positioning according to the send triggering signaling includes:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

According to the positioning method described in the embodiment of the present disclosure, the relative position between the first terminal and the at least one first device can be determined according to the first measurement information and/or the second measurement information, achieving the positioning in the scenario without the network coverage.

In the embodiment of the present disclosure, optionally, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the positioning method, the second measurement information includes one or more of following information:
an AOA of the second SL-PRS;
time difference between time for sending the first SL-PRS and time for receiving the second SL-PRS;
time difference between times for receiving the second SL-PRS by respective different antenna panels.

In an implementation, optionally, in the positioning method, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

In an implementation of the positioning method, optionally, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

In the embodiment of the present disclosure, optionally, in the step S210, before sending the trigger signaling, the method further includes:
sending a positioning request message to the at least one first device;
receiving a positioning response message sent by the at least one first device.

Optionally, the positioning request message includes one or more of following information:
terminal information of the first terminal;
measurement information that needs to report;
resource configuration information of the first SL-PRS;
beam angle information of the first SL-PRS;
resource configuration information of the second SL-PRS;
beam angle information of the second SL-PRS;
a reporting mode to report the measurement information;
a measurement capability of the first terminal;
a reporting request of a measurement information type supported by the first terminal.

Optionally, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

According to the positioning method described in the embodiment of the present disclosure, the first terminal sends the positioning request message to the at least one first device to request the positioning with the at least one first device.

Optionally, after receiving the positioning request message, the at least one first device around the first terminal sends the positioning response message to the first terminal.

Optionally, when power of the positioning request message received by the at least one first device is greater than or equal to a preset threshold value, the positioning response message is sent to the first terminal. That is, only the at least one first device within a preset range from the first terminal will send the positioning response message according to the positioning request message sent by the first terminal.

Optionally, the positioning request message includes resource configuration information of the second SL-PRS, which is used to indicate that the at least one first device needs to send the resource configuration used by the second SL-PRS; the resource set of the second SL-PRS and/or the resource configuration information of the second SL-PRS included in the positioning response message is used to feedback to the first terminal the resource set and/or resource used by the at least one first device to send the second SL-PRS, so that the first terminal can measure the second SL-PRS according to the resource configuration of the second SL-PRS indicated in the positioning response message.

In combination with the specific implementations, the implementation process of the positioning method in the embodiments of the present disclosure is described below with reference to specific examples.

### Implementation 1

In the implementation 1, a first terminal sends a second trigger signaling to at least one first device, receives a second SL-PRS sent by the at least one first device, and performs measurement positioning according to second measurement information by obtained by measuring the second SL-PRS.

In the implementation 1, optionally, the first terminal also sends a positioning request message to the at least one first device, so that the at least one first device within a preset distance range of the first terminal sends a positioning response message to the first terminal, which is used to indicate one or more of followings: the device information of the at least one first device, a resource set for sending the second SL-PRS, resource configuration information for sending the second SL-PRS, and beam angle information for sending the second SL-PRS.

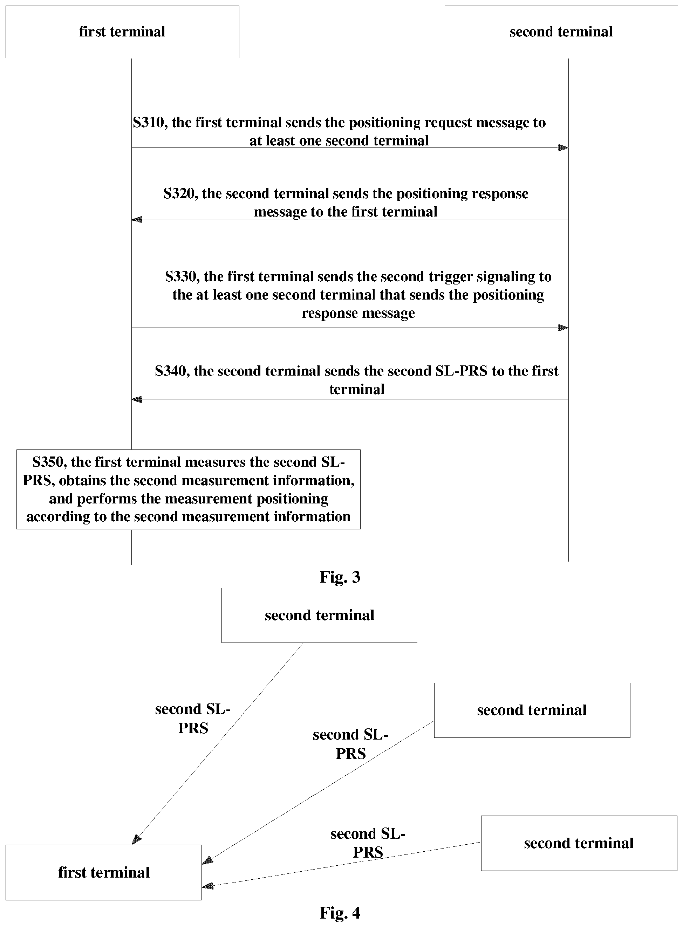

Specifically, as shown in Figs. 3 and 4, in the case that the at least one first device includes multiple second terminals and relative positions between the multiple second terminals are unknown for exmaple, a specific implementation process of the implementation 1 include the following steps.

Step S310, the first terminal sends the positioning request message to at least one second terminal.

Optionally, the positioning request message includes resource configuration information of the second SL-PRS (used for resource configuration information of an SL-PRS sent by the second terminal) and/or terminal information of the first terminal. Optionally, the positioning request message can be sent through a control channel or a broadcast channel.

In an implementation, optionally,
Step S320, the at least one second terminal sends the positioning response message to the first terminal.

Optionally, when power of the positioning request message received by the at least one second terminal is greater than or equal to a preset threshold value, the positioning response message is sent to the first terminal.

In an implementation, optionally, the positioning response message includes one or more of following information: the resource configuration information of the second SL-PRS, terminal information of the second terminal, and beam angle information of the second SL-PRS. The second SL-PRS refers to the SL-PRS sent by the second terminal.

Optionally, the resource configuration information of the second SL-PRS includes a resource set of the second SL-PRS and/or a resource configuration of the second SL-PRS.

Step S330, the first terminal sends the second trigger signaling to the at least one second terminal that sends the positioning response message.

Specifically, the first terminal sends the second trigger signaling to the corresponding at least one second terminal according to the terminal information of the second terminal included in the received positioning response message.

Optionally, the second trigger signaling is sent through the control channel or the broadcast channel.

In an implementation, optionally, when the second trigger signaling is sent through the control channel, multiple second terminals can be triggered to transmit the second SL-PRS through a single second trigger signaling, or the multiple second trigger signalings can be used to sequentially trigger each of the second terminals to transmit the second SL-PRS.

Step S340, after receiving the second trigger signaling, the at least one second terminal sends the second SL-PRS to the first terminal according to the resource configuration information of the second SL-PRS in the positioning request message and/or the positioning response message.

Step S350, the first terminal measures the second SL-PRS sent by the at least one second terminal, obtains the second measurement information, and performs the measurement positioning according to the second measurement information.

In an implementation, optionally, the second measurement information includes an Angle Of Arrival (AOA) of the second SL-PRS and/or time difference between times for receiving the second SL-PRS by respective different antenna panels.

Specifically, the first terminal determines, according to a measured second SL-PRS, the AOA of each second SL-PRS by using an angle estimation algorithm.

When the first terminal is configured with multiple antenna panels distributed at different positions, each panel can measure an arrival time of the corresponding second SL-PRS, thereby obtaining Time Difference Of Arrival (TDOA) between different antenna panels. Furthermore, the first terminal can determine relative position information between at least one second terminal and the first terminal according to an AOA measurement value and a TDOA measurement value, respectively. The relative position includes a distance between the second terminal and the first terminal and/or azimuth information between the second terminal and the first terminal.

Thus, based on the implementation 1, as shown in Fig. 4, the first terminal can obtain the relative position information between the at least one second terminal and the first terminal respectively according to the SL-PRS sent by the at least one second terminal.

### Implementation 2

In the implementation 2, a first terminal sends a first trigger signaling to at least one first device and sends a first SL-PRS to the at least one first device. The at least one first device measures the first SL-PRS to obtain the first measurement information, and sends the first measurement information to the first terminal. The first terminal sends a second trigger signaling to the at least one first device, receives a second SL-PRS sent by the at least one first device, measures the second SL-PRS, and obtains the second measurement information. The first terminal performs measurement positioning according to the first measurement information and the second measurement information.

In an implementation, optionally, the first terminal receives the second SL-PRS after sending the first SL-PRS; in another implementation, optionally, the first terminal sends the first SL-PRS after receiving the second SL-PRS.

In the following, as an example, the first terminal first receives the second SL-PRS and then sends the first SL-PRS to describe in detail the implementation 2 of the positioning method described in the embodiment of the present disclosure.

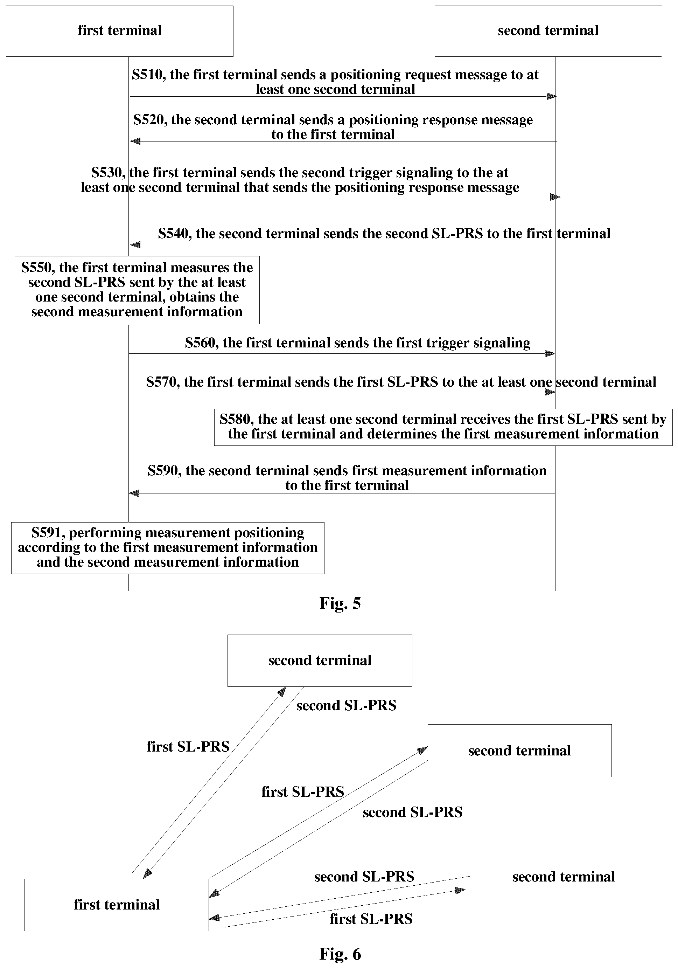

Specifically, as shown in Figs. 5 and 6, in the case that the at least one first device includes multiple second terminals and relative positions between the multiple second terminals are unknown for example, a specific implementation process of the implementation 2 includes the following steps.

Step S510, the first terminal sends a positioning request message to at least one second terminal.

Optionally, the positioning request message includes resource configuration information of the second SL-PRS (used for resource configuration information of an SL-PRS sent by the second terminal) and/or terminal information of the first terminal. Optionally, the positioning request message can be sent through a control channel or a broadcast channel.

In an implementation, optionally,
Step S520, the at least one second terminal sends a positioning response message to the first terminal.

Optionally, when power of the positioning request message received by the at least one second terminal is greater than or equal to a preset threshold value, the positioning response message is sent to the first terminal.

In an implementation, optionally, the positioning response message includes one or more of following information: the resource configuration information of the second SL-PRS, terminal information of the second terminal, and beam angle information of the second SL-PRS. The second SL-PRS refers to the SL-PRS sent by the second terminal.

Optionally, the resource configuration information of the second SL-PRS includes a resource set of the second SL-PRS and/or a resource configuration of the second SL-PRS.

Step S530, the first terminal sends the second trigger signaling to the at least one second terminal that sends the positioning response message.

Specifically, the first terminal sends the second trigger signaling to the corresponding at least one second terminal according to the terminal information of the second terminal included in the received positioning response message.

Optionally, the second trigger signaling is sent through the control channel or the broadcast channel.

In an implementation, optionally, when the second trigger signaling is sent through the control channel, multiple second terminals can be triggered to transmit the second SL-PRS through a single second trigger signaling, or the multiple second trigger signalings can be used to sequentially trigger each of the second terminals to transmit the second SL-PRS.

Step S540, after receiving the second trigger signaling, the at least one second terminal sends the second SL-PRS to the first terminal according to the resource configuration information of the second SL-PRS in the positioning request message and/or the positioning response message.

Step S550, the first terminal measures the second SL-PRS sent by the at least one second terminal, obtains the second measurement information. Optionally, the second measurement information includes Angle Of Arrival (AOA) information of each second SL-PRS, represented as AOA_r.

Step S560, the first terminal determines time for sending the first SL-PRS and sends the first trigger signaling.

Optionally, the first terminal sends the first trigger signaling through the control channel or the broadcast channel.

In an implementation, optionally, the first trigger signaling includes time for sending the first SL-PRS and/or resource configuration information of the first SL-PRS to be sent.

Step S570, the first terminal sends the first SL-PRS to the at least one second terminal.

Step S580, the at least one second terminal receives the first SL-PRS sent by the first terminal and determines the first measurement information.

In an implementation, the at least one second terminal respectively determines the AOA of each received first SL-PRS, represented as AOA_t, and the at least one second terminal determines time difference between time for sending the second SL-PRS and time for receiving the first SL-PRS, represented as T_rxtx.

Based on the above calculation, optionally, the first measurement information includes the AOA of each received first SL-PRS and/or the time difference between the time for sending the second SL-PRS and the time for receiving the first SL-PRS.

Step S590, the at least one second terminal sends calculated first measurement information to the first terminal.

Step S591, the first terminal receives the first measurement information and performs measurement positioning according to the first measurement information and the second measurement information.

Specifically, the first terminal also determines time difference between time for receiving the second SL-PRS and time for sending the first SL-PRS, represented as T_rxtx.

Specifically, the first terminal can calculate a respect distance and respective angle information between the first terminal and each of the at least one second terminal according to the AOA_r, AOA_t, T_rxtx, and T_txrx obtained by sending the first SL-PRS and receiving the second SL-PRS, and then determine a relative position relationship between the first terminal and each second terminal, thereby achieving relative positioning.

In the implementation 2, the first terminal uses multiple antennas on one antenna panel to form an array, that is, it can achieve relative positioning between the terminals. Compared with the implementation 1, there's no need for the first terminal to be configured with multiple antenna panels.

Optionally, in the above implementation 1 and 2, the method further includes:
the first terminal sends calculated relative position information relative to the at least one second terminal (the second device) to the second terminal and/or a positioning server, enabling the second terminal and/or the positioning server to know the relative position between the first terminal and the at least one second terminal.

In the embodiment of the present disclosure, optionally, the at least one first device may further include a Road Side Unit (RSU), and position information of each road side unit is known. In this scenario, the RSU can perform a same operation as the second terminal in the implementations 1 and 2. Optionally, the RSU can also send its position information to a target User Equipment (UE) to achieve absolute positioning of the target UE.

### Implementation 3

In the implementation 3, a first terminal sends a first triggering signal to at least one first device and sends a first SL-PRS to the at least one first device. The at least one first device measures the first SL-PRS to obtain the first measurement information, and sends the first measurement information to the first terminal.

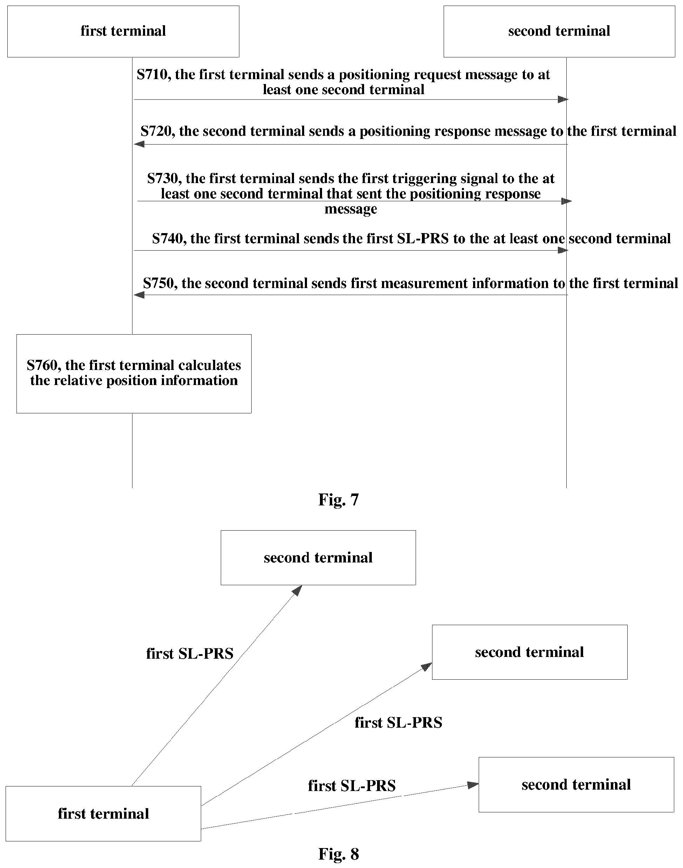

Specifically, as shown in Figs. 7 and 8, in the case that the at least one first device includes multiple second terminals, and the relative position between the multiple second terminals is unknown for example, a specific implementation process of the implementation 3 includes the following steps.

Step S710, the first terminal sends a positioning request message to at least one second terminal;

Optionally, the positioning request message includes resource configuration information of the first SL-PRS (resource configuration information of an SL-PRS sent by the first terminal), terminal information of the first terminal, measurement information that needs to be reported (such as TDOA and/or AOA), and beam angle information of the first SL-PRS. Optionally, the positioning request message can be sent through a control channel or a broadcast channel.

In an implementation, optionally,
Step S720, the at least one second terminal sends a positioning response message to the first terminal.

Optionally, when power of the positioning request message received by the at least one second terminal is greater than or equal to a preset threshold value, the positioning response message is sent to the first terminal.

In an implementation, optionally, the positioning response message may include terminal information of the second terminal, beam angle information of the first SL-PRS that can be received, etc. The first SL-PRS refers to the SL-PRS sent by the first terminal.

Step S730, the first terminal sends the first triggering signal to the at least one second terminal that sent the positioning response message.

Optionally, the first triggering signal includes one or more of followings: resource configuration information of the first SL-PRS, terminal information of the first terminal, measurement information that needs to be reported (such as TDOA and/or AOA), beam angle information of the first SL-PRS, and a reporting mode to report the measurement information.

Step S740, the first terminal sends the first SL-PRS to the at least one second terminal according to the sent first triggering signal.

Step S750, the at least one second terminal receives the first SL-PRS, measures the first SL-PRS according to the measurement information indicated in the positioning request message or the first triggering signal, obtains the corresponding first measurement information, and reports the first measurement information to the first terminal according to the reporting mode of the measurement information indicated by the first triggering signal.

Step S760, the first terminal can calculate and obtain the respective relative position information between the first terminal and each of the at least one second terminal according to an AOA value and a TDOA value in the first measurement information, thus achieving the relative positioning.

### Implementation 4

In the implementation 4, similar to the implementation 2, a first terminal sends a first trigger signaling to at least one first device and then sends a first SL-PRS to the at least one first device according to the first trigger signaling. The at least one first device measures the first SL-PRS to obtain the first measurement information, and sends the first measurement information to the first terminal; and the first terminal sends a second trigger signaling to the at least one first device, receives a second SL-PRS sent by the at least one first device, measures the second SL-PRS to obtain second measurement information; and performs positioning measurement according to the first measurement information and the second measurement information.

In this implementation, the first terminal first sends the first SL-PRS and then receives the second SL-PRS. The implementation process includes the following steps.

The first terminal sends the first trigger signaling to at least one second terminal and then sends the first SL-PRS to the at least one second terminal according to the first trigger signaling. Optionally, the first trigger signaling includes measurement information (e.g., including T_txrx and/or AOA) that the at least one second terminal needs to report and/or a reporting mode to report the measurement information by the at least one second terminal.

The first terminal sends the second trigger signaling to the at least one second terminal, and the second trigger signaling instructs the at least one second terminal to send the second SL-PRS to the first terminal; optionally, the second trigger signaling includes terminal information of the first terminal.

The at least one second terminal sends the second SL-PRS to the first terminal according to the second trigger signaling.

Furthermore, the second terminal determines time difference between time for sending the second SL-PRS and time for receiving the first SL-PRS, represented as T_txrx. The first SL-PRS is received according to the first trigger signaling, and the first measurement information is reported to the first terminal; optionally, the first measurement information includes an Angle Of Arrival (AOA) of the first SL-PRS, represented as AOA_t and/or T_txrx.

The first terminal receives the second SL-PRS according to the second trigger signaling, determines AOA information of each second SL-PRS, represented as AOA_r, and determines time difference between time for sending the first SL-PRS and time for receiving the second SL-PRS, represented as T_rxtx; that is, obtains the second measurement information, including the AOA information of each second SL-PRS and/or the time difference between time for sending the first SL-PRS and time for receiving the second SL-PRS.

The first terminal calculates distance information and angle information between the first terminal and the at least one second terminal according to the obtained first measurement information and the second measurement information, that is, according to AOA_r, AOA_t, T_rxtx, and T_txrx, thereby obtaining the relative position relationship between the first terminal and the at least one second terminal to achieve relative positioning.

It should be noted that there is no time sequence requirement for the first terminal to send the first trigger signaling and the second trigger signaling. The second trigger signaling can be sent first, followed by the first trigger signaling.

In another implementation of the positioning method described in the embodiment of the present disclosure, the first SL-PRS sent by the first terminal and/or the second SL-PRS sent by the at least one second terminal each include one or more SL-PRS resources, each resource corresponds to a beam direction.

In this implementation, the first SL-PRS or the second SL-PRS can be sent in a beam scanning manner. In this case, beam angle information of each first SL-PRS and each second SL-PRS can be notified to the corresponding receiving terminal.

For example, the first trigger signaling includes the beam angle information of the first SL-PRS sent by the first terminal and/or reporting information of measurement information AOD (Angle Of Departure). In this way, the at least one second terminal can determine AOD information sent by the first SL-PRS according to the corresponding beam angle information and a received power RSRP value corresponding to the first SL-PRS, and then feedback the AOD information (i.e., the first measurement information including the AOD information sent by the first SL-PRS) to the first terminal.

The first terminal can determine the relative position relationship between the first terminal and the second terminal according to the AOD value fed back by the at least one second terminal and time difference between the time for sending and the time for receiving an SL-PRS by the first terminal and the second terminal, without using the AOA value for positioning.

In yet another implementation, optionally, the first trigger signaling may not include the beam angle information of the first SL-PRS, but include reporting information of a measurement value RSRP. Thus, the at least one second terminal can report RSRP information of each first SL-PRS to the first terminal. The first terminal calculates the measurement value AOD according to the RSRP information and the beam angle information of the corresponding first SL-PRS, and performs positioning calculation. Similarly, the first terminal can also measure the RSRP value of the second SL-PRS sent by at least one second terminal, and obtain the AOD value sent by the corresponding second SL-PRS according to the beam angle information of the second SL-PRS included in a response message of the second terminal, the response message of the second terminal is obtained after sending a positioning request message to the second terminal, and the AOD value is used for the positioning calculation.

It should be noted that the method of performing positioning measurement by the first terminal can also be applied to other embodiments of the present disclosure, which will not be further elaborated herein.

The positioning method described in the embodiments of the present disclosure may adopt any one of the implementations 1 to 4 to calculate the relative position relationship between the first terminal and the at least one first device.

It should be noted that the first device may include the at least one second terminal and/or at least one RSU.

The first terminal and the second terminal may be vehicle-mounted terminals.

In the positioning method described in the embodiment of the present disclosure, in an implementation, optionally, after performing measurement positioning in step S220, the method further includes:
obtaining relative position information between the first terminal and the at least one first device;
reporting the relative position information to the at least one first device and/or a positioning server.

In an implementation, when the first terminal is within a network coverage area, the first terminal may report the calculated relative position information between the first terminal and the at least one first device to the positioning server, enabling the positioning server to calculate an absolute position of the first terminal according to the obtained relative position information. In this way, the relative positioning between terminals is utilized to improve accuracy of the absolute positioning.

In the embodiment of the present disclosure, in an implementation, optionally, the method further includes:
performing Downlink Positioning Reference Signal (DL-PRS) measurement according to first indication information sent by the positioning server to obtain third measurement information;
reporting the third measurement information and the first measurement information to the positioning server; or, reporting the third measurement information and the second measurement information to the positioning server.

In this implementation, when the first terminal is within the network coverage area, the first terminal can enable the positioning server to perform the positioning calculation by reporting the third measurement information for DL-PRS measurement, and the first measurement information and/or the second measurement information for the SL-PRS measurement between the first terminal and the at least one first device.

In an implementation, optionally, using the above information, the positioning server can calculate and obtain one or more of following information:
the absolute position of the first terminal;
an absolute position of the at least one first device;
a relative position between the first terminal and the at least one first device.

In the implementation, optionally, the method further includes:
receiving second indication information sent by the positioning server; the second indication information includes one or more of following information:
the absolute position of the first terminal;
the absolute position of the at least one first device;
the relative position between the first terminal and the at least one first device.

A specific implementation process of performing positioning measurement using a positioning server is described below in conjunction with implementation 5.

### Implementation 5

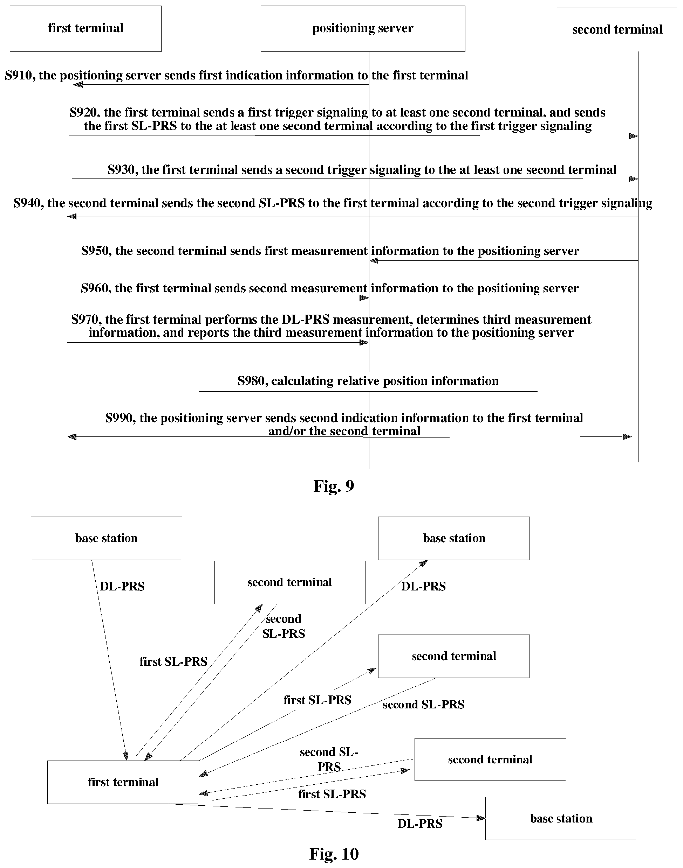

In the implementation 5, a first terminal performs Downlink Positioning Reference Signal (DL-PRS) measurement to obtain third measurement information; reports the third measurement information and first measurement information to a positioning server; or reports the third measurement information and second measurement information to the positioning server, so that the positioning server performs positioning measurement. According to Figs. 9 and 10, the implementation process includes the following steps.

Step S910, the positioning server sends first indication information to the first terminal, indicating the first terminal to perform the DL-PRS measurement.

Optionally, the first indication information indicates one or more of following information to the first terminal:
configuration information of the DL-PRS sent by multiple network devices (such as base stations);
measurement information that needs to be reported by the first terminal for the positioning measurement;
a reporting mode for the first terminal to report the measurement information;
resource configuration information of a second SL-PRS sent by at least one first device.

Optionally, the positioning server can also send to the at least one first device the resource configuration information of a first SL-PRS sent by the first terminal.

Therefore, in an embodiment of the present disclosure, in an implementation, the method further includes:
receiving the resource configuration information of the first SL-PRS and/or the resource configuration information of the second SL-PRS sent by the positioning server.

Step S920, the first terminal sends a first trigger signaling to at least one second terminal, and sends the first SL-PRS to the at least one second terminal according to the first trigger signaling, as shown in Fig. 10.

Step S930, the first terminal sends a second trigger signaling to the at least one second terminal, and the second trigger signaling instructs the at least one second terminal to send the second SL-PRS to the first terminal.

Step S940, the at least one second terminal sends the second SL-PRS to the first terminal according to the second trigger signaling.

Step S950, the at least one second terminal receives the first SL-PRS according to the first trigger signaling, determines an Angle Of Arrival (AOA) of the first SL-PRS, represented as AOA_t; and determines time difference between time for sending the second SL-PRS and time for receiving the first SL-PRS, represented as T_txrx.

Based on the determined AOA_t and T_txrx, the first measurement information (including AOA_t and T_txrx) is sent to the positioning server.

Step S960, the first terminal receives the second SL-PRS according to the second trigger signaling, determines the AOA of each second SL-PRS, represented as AOA_r; and determines time difference between time for sending the first SL-PRS and time for receiving the second SL-PRS, represented as T_rxtx.

Based on the determined AOA_r and T_rxtx, it reports the second measurement information (such as including AOA_r and T_rxtx) to the positioning server.

Step S970, the first terminal performs the DL-PRS measurement according to the measurement information to be reported and the configuration information of the DL-PRS indicated by the first indication information, and determines the third measurement information, such as the third measurement information including a measurement quantity of DL-RSTD and/or DL-RSRP;

the first terminal reports the third measurement information to the positioning server.

Step S980, the positioning server calculates the absolute position information of the first terminal according to a known base station position and the third measurement information reported by the first terminal. Simultaneously, the positioning server calculates relative position information between the first terminal and the at least one second terminal according to the second measurement information reported by the first terminal and the first measurement information reported by the at least one second terminal.

Step S990, the positioning server sends second indication information to the first terminal and/or the second terminal; the second indication information includes one or more of following information:
an absolute position of the first terminal;
an absolute position of the at least one first device;
a relative position between the first terminal and the at least one first device.

In the embodiment of the present disclosure, optionally, the first terminal sending the first SL-PRS to the at least one second terminal and the at least one second terminal sending the second SL-PRS to the first terminal may be instructed by the positioning server, rather than being achieved by the first terminal sending a trigger signaling.

### Implementation 6

In the positioning method described in the embodiments of the present disclosure, in an implementation, optionally, the method further includes:
sending a Sounding Reference Signal (SRS) according to a third trigger signaling of a network device;
acquiring fourth measurement information, wherein the fourth measurement information is obtained by the network device through measuring the SRS;
obtaining an absolute position of a first terminal according to the fourth measurement information and an absolute position of the network device.

Optionally, the network device can be a serving base station for the first terminal.

In this implementation, a positioning server can configure the network device (such as the serving base station) to trigger the first terminal to send the SRS. The network device measures the SRS and reports the fourth measurement information. The positioning server can calculate the absolute position of the first terminal through the fourth measurement information reported by the network device and the absolute position of the network device.

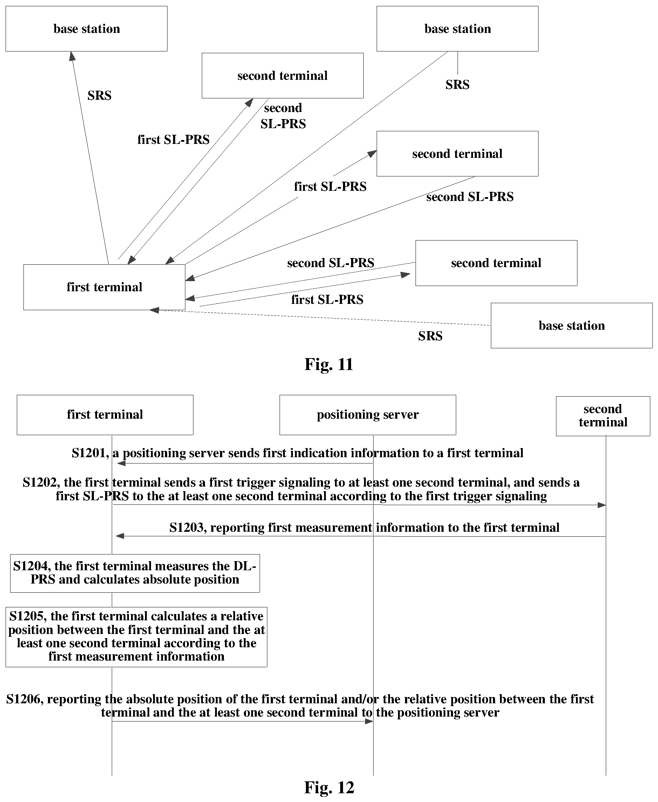

Referring to Fig. 11, a specific implementation process of the implementation includes:
the positioning server instructs the first terminal to perform positioning measurement and indicates positioning assistance data to the first terminal; optionally, the positioning assistance data includes reporting information of a measurement result that the first terminal is to report, such as measurement information need to be reported and/or a reporting mode to report the measurement information;
the positioning server configures the serving base station of the first terminal to measure the SRS sent by the first terminal and report the fourth measurement information; optionally, the fourth measurement information includes Uplink Relative Time Of Arrival (UL-RTOA) and/or UL-AOA;
the serving base station of the first terminal sends the third trigger signaling to the first terminal to trigger the first terminal to send the SRS;
the serving base station measures the SRS sent by the first terminal to obtain the UL-RTOA and/or the UL-AOA and reports the measured UL-RTOA and/or UL-AOA to the positioning server.

In addition, the first terminal may also send a first trigger signaling and/or a second trigger signaling. According to the first trigger signaling and/or the second trigger signaling, the first terminal sends a first SL-PRS to at least one second terminal, and/or the at least one second terminal may send a second SL-PRS to the first terminal, and report first measurement information and/or second measurement information respectively obtained to the positioning server. The specific implementation process can refer to the detailed description of the above implementation, which will not be repeated herein.

The positioning server may also calculate a relative position between the first terminal and the at least one second terminal according to the second measurement information reported by the first terminal (such as AOA_r and/or T_rxtx) and the first measurement information reported by at least one second terminal (such as AOA_t and/or T_txrx).

Based on the above position information calculated by the positioning server, the positioning server sends second indication information to the first terminal and/or the second terminal; the second indication information includes one or more of following information:
the absolute position of the first terminal;
an absolute position of the at least one first device;
a relative position between the first terminal and the at least one first device.

In another implementation of the present disclosure, according to the positioning method described in the embodiment of the present disclosure, when the first terminal is within the network coverage, in addition to using the positioning server for the positioning measurement as described above, the first terminal can also perform the positioning measurement to obtain the absolute position of the first terminal and/or the relative position between the first terminal and the at least one second terminal.

Based on this implementation, the positioning method described in the present disclosure may also include:
performing Downlink Positioning Reference Signal (DL-PRS) measurement according to first indication information sent by a positioning server, to obtain third measurement information;
obtaining the absolute position of the first terminal according to an absolute position of at least one network device and the third measurement information;
reporting the absolute position of the first terminal to the positioning server.

According to the implementation, the first terminal can obtain the absolute position of the first terminal according to the third measurement information obtained by the DL-PRS measurement and the absolute position of the at least one network device, and report the absolute position to the positioning server.

### Implementation 7

Referring to Fig. 12, this implementation includes the following steps.

Step S1201, a positioning server sends first indication information to a first terminal, instructing the first terminal to perform Downlink Positioning Reference Signal (DL-PRS) measurement.

Optionally, the first indication information indicates one or more of following information to the first terminal:
configuration information of the DL-PRS sent by multiple network devices (e.g., base stations);
beam angle information of the DL-PRS sent by multiple network devices (e.g., base stations);
resource configuration information of a second SL-PRS sent by at least one first device;
absolute position information of at least one network device.

Step S1202, the first terminal sends a first trigger signaling to at least one second terminal, and sends a first SL-PRS to the at least one second terminal according to the first trigger signaling.

Step S1203, the at least one second terminal receives the first SL-PRS according to the first trigger signaling, determines an Angle Of Arrival (AOA) of the first SL-PRS; optionally, assuming the first terminal has multiple antenna arrays, the at least one second terminal also measures an SL-RSTD value of the first SL-PRS. Based on the measured AOA and the SL-RSTD value, at least one second terminal reports the first measurement information to the first terminal.

Step S1204, the first terminal measures, according to a configuration of the positioning server, the DL-PRS sent by multiple network devices to obtain the corresponding DL-RSTD/DL-RSRP (third measurement information), and calculates absolute position information of the first terminal according to the DL-RSTD/DL-RSRP and absolute position information of the network device.

Step S1205, the first terminal calculates a relative position between the first terminal and the at least one second terminal according to the first measurement information reported by the at least one second terminal.

Step S1206, the first terminal reports the calculated absolute position of the first terminal and/or the relative position between the first terminal and the at least one second terminal to the positioning server.

Optionally, the positioning server indicates to the at least one second terminal the absolute position of the first terminal and/or the relative position between the first terminal and the at least one second terminal that is reported by the first terminal.

In an implementation, optionally, the positioning server can calculate an absolute position of the at least one second terminal according to the absolute position of the first terminal and/or the relative position between the first terminal and the at least one second terminal that is reported by the first terminal, and transmit the calculated absolute position to the first terminal.

In another implementation, optionally, the positioning server instructs the first terminal to perform positioning measurement. Additionally, the positioning server configures the base station to report UL-RTOA and/or UL-AOA information to the first terminal based on a Sounding Reference Signal (SRS) measurement sent by the first terminal. The positioning server also indicates configuration information of the SL-PRS of the at least one second terminal to a target UE. Furthermore, the positioning server indicates configuration information of the SL-PRS of the first terminal to the at least one second terminal, and indicates reporting information of a positioning measurement result of the at least one second terminal, and the measurement result is reported to the first terminal.

### Implementation 8

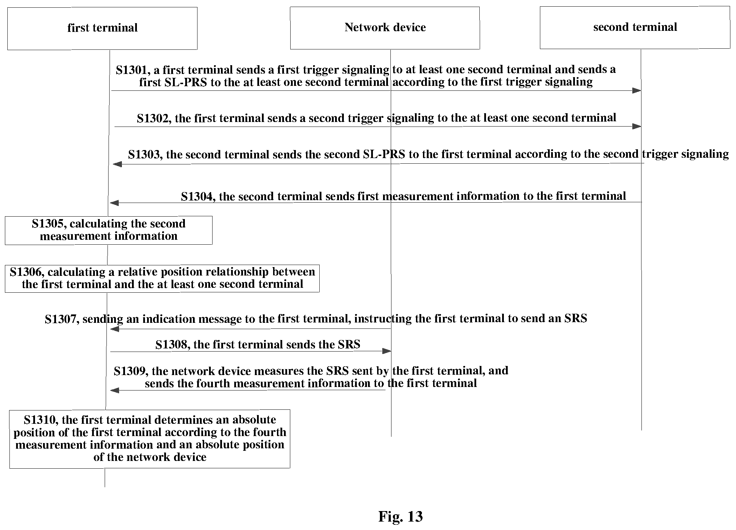

Referring to Fig. 13, an implementation process of the implementation includes the following steps.

Step S1301, a first terminal sends a first trigger signaling to at least one second terminal and sends a first SL-PRS to the at least one second terminal according to the first trigger signaling.

Step S1302, the first terminal sends a second trigger signaling to the at least one second terminal, and the second trigger signaling instructs the at least one second terminal to send a second SL-PRS to the first terminal.

Step S1303, the at least one second terminal sends the second SL-PRS to the first terminal according to the second trigger signaling.

Step S1304, the at least one second terminal receives the first SL-PRS according to the first trigger signaling, determines an Angle Of Arrival (AOA) of the first SL-PRS, represented as AOA_t, and determines time difference between time for sending the second SL-PRS and time for receiving the first SL-PRS, represented as T_txrx.

Based on the determined AOA_t and T_txrx, it sends the first measurement information (including AOA_t and T_txrx) to the first terminal.

Step S1305, the first terminal receives the second SL-PRS according to the second trigger signaling, obtains second measurement information, determines the AOA of each second SL-PRS, represented as AOA_r; and determines time difference between time for sending the first SL-PRS and time for receiving the second SL-PRS, represented as T_rxtx.

Step S1306, according to the first measurement information and the second measurement information obtained above, i.e., AOA_r, AOA_t, T_rxtx, and T_txrx, the first terminal calculates distance information and angle information between the first terminal and the at least one second terminal, and then obtains a relative position relationship between the first terminal and the at least one second terminal, to achieve relative positioning.

Step S1307, the first terminal receives an indication message sent by a network device (e.g., the serving base station of the first terminal), instructing the first terminal to send an SRS.

Step S1308, the first terminal sends the SRS according to the indication message.

Step S1309, the network device measures the SRS sent by the first terminal, obtains fourth measurement information, such as UL-RTOA and/or UL-AOA, and the network device sends the fourth measurement information to the first terminal.

Step S1310, the first terminal determines an absolute position of the first terminal according to the fourth measurement information and an absolute position of the network device.

In another implementation, optionally, after the network device triggers the first terminal to send an SRS and measures the SRS, the UL-RTOA and/or UL-AOA are reported to a positioning server. The positioning server calculates an absolute position of a first position according to the UL-RTOA/UL-AOA reported by the network device and absolute position information of a base station, and indicates the absolute position to the first terminal.

In the embodiment of the present disclosure, optionally, in the case that the at least one first device includes a road side unit (RSU), the method further includes:
receiving position information sent by the RSU;
after performing the measurement positioning according to the trigger signaling, the positioning method further includes:
   determining an absolute position of the first terminal according to a positioning result of the measurement positioning.

According to this implementation, based on that the at least one first device can be an RSU and the RSU position is fixed, the absolute position of the first terminal can be determined according to the positioning result of the measurement positioning, that is, according to a relative position between the first terminal and the RSU.

In an implementation, optionally, the method further includes:
sending a deactivation signaling to the at least one first device;
wherein in the case that the trigger signaling includes the first trigger signaling, the deactivation signaling is used to deactivate transmission of the first SL-PRS;
in the case that the trigger signaling includes the second trigger signaling, the deactivation signaling is used to deactivate transmission of the second SL-PRS.

According to the implementation, the transmission of the first SL-PRS and/or the second SL-PRS can be deactivated by sending the deactivation signaling.

According to the positioning method described in the embodiment of the present disclosure, the first terminal sends a first trigger signaling and/or a second trigger signaling, so that the first terminal can perform sidelink positioning reference signal (SL-PRS) transmission and measurement with at least one first device, and use the measurement information obtained by measuring the SL-PRS to perform measurement positioning between the first terminal and the at least one first device, achieving the positioning between the first terminal and the at least one first device in the scenario without the network coverage.

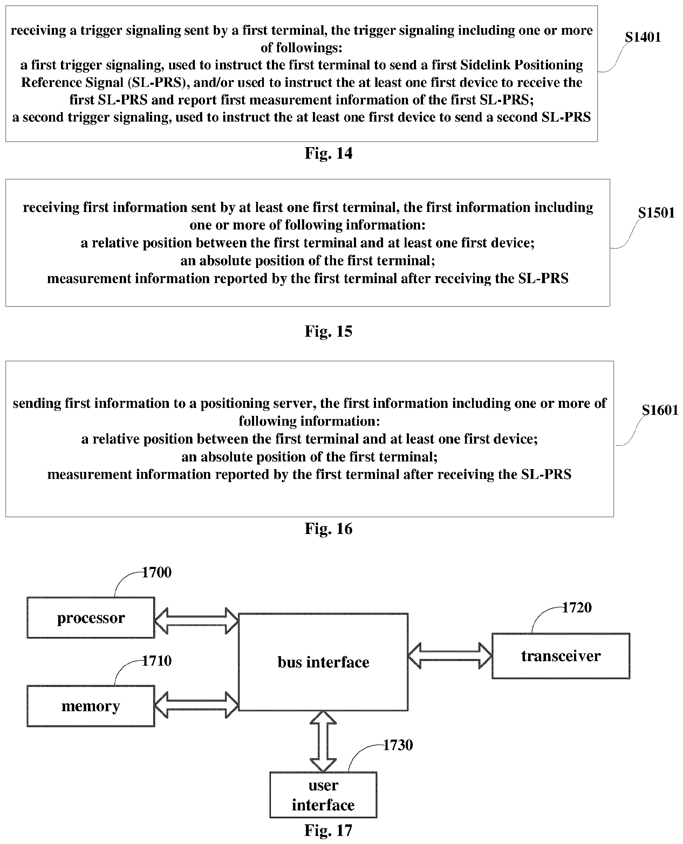

As shown in Fig. 14, an embodiment of the present disclosure also provides a positioning method, which is performed by a first device and includes:
step S1401, receiving a triggering signal sent by a first terminal, wherein the triggering signal includes one or more of followings:
a first trigger signaling, used to instruct the first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS.

Optionally, the at least one first device includes at least one second terminal and/or at least one Road Side Unit. Optionally, the first terminal and the second terminal may be vehicle-mounted terminals.

According to the positioning method described in the embodiment of the present disclosure, the first terminal sends a first trigger signaling and/or a second trigger signaling, so that the first terminal can perform Sidelink Positioning Reference Signal (SL-PRS) transmission and measurement with at least one first device, and use the measurement information obtained by measuring the SL-PRS to perform measurement positioning between the first terminal and the at least one first device, achieving the positioning between the first terminal and the at least one first device in a scenario without the network coverage.

In an implementation, optionally, in the case that the trigger signaling includes the first trigger signaling, the method further includes:
receiving the first SL-PRS sent by the first terminal;
reporting the first measurement information to the first terminal and/or a positioning server after measuring the first SL-PRS.

Optionally, in the positioning method, in the case that the trigger signaling includes the second trigger signaling, the method further includes:
sending the second SL-PRS to the first terminal according to the second trigger signaling.

Optionally, in the positioning method, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the positioning method, before receiving the trigger signaling, the positioning method further includes:
receiving a positioning request message sent by the first terminal;
sending a positioning response message to the first terminal according to the positioning request message.

Optionally, in the positioning method, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the positioning method, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the positioning method, the positioning request message includes one or more of following information:
terminal information of the first terminal;
measurement information that needs to report;
resource configuration information of the first SL-PRS;
beam angle information of the first SL-PRS;
resource configuration information of the second SL-PRS;
beam angle information of the second SL-PRS;
a reporting mode to report the measurement information;
a measurement capability of the first terminal;
a reporting request of a measurement information type supported by the first terminal.

Optionally, in the positioning method, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, in the positioning method, the method further includes:
obtaining relative position information sent by the first terminal, wherein the relative position information indicates a relative position between the first terminal and the at least one first device.

Optionally, in the positioning method, the method further includes:
receiving second indication information sent by the positioning server; the second indication information includes one or more of following information:
an absolute position of the first terminal;
an absolute position of the first device;
a relative position between the first terminal and the first device.

Optionally, the method further includes:
receiving resource configuration information of the first SL-PRS and/or resource configuration information of the second SL-PRS sent by a positioning server.

Optionally, in the case that the first device is a Road Side Unit (RSU), the positioning method further includes:
sending position information of the RSU to the first terminal.

It should be noted that the specific implementation of the positioning method in the embodiment of the present disclosure applied to the first device can also be applied to the implementation process performed by the first device. The implementatioin process of the positioning method performed by the first device is not elaborated herein. For details thereof, please refer to the above specific implementation description with respect to the first device.

As shown in Fig. 15, an embodiment of the present disclosure also provides a positioning method, which is executed by a positioning server and includes:
step S1501, receiving first information sent by at least one first terminal, wherein the first information includes one or more of followings:
a relative position between the first terminal and at least one first device;
an absolute position of the first terminal;
measurement information reported by the first terminal after receiving the SL-PRS.

Optionally, the method further includes:
sending the first information to the at least one first device.

Optionally, in the case that the first information includes the measurement information, the method further includes:
calculating the absolute position of the first terminal according to the measurement information;
sending the calculated absolute position to the first terminal and/or the at least one first device.

Optionally, the method further includes:
sending resource configuration information of the SL-PRS to the first terminal.

Optionally, in the positioning method, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

As shown in Fig. 16, the embodiment of the present disclosure also provides another positioning method, which is performed by a first terminal and includes:
step S1601, sending first information to the positioning server, the first information including one or more of following information:
a relative position between the first terminal and at least one first device;
an absolute position of the first terminal;
measurement information reported by the first terminal after receiving the SL-PRS.

Optionally, in the case that the first information includes the measurement information, the method further includes:
receiving the absolute position of the first terminal calculated by the positioning server according to the measurement information.

Optionally, in the positioning method, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

As shown in Fig. 17, an embodiment of the present disclosure also provides a terminal, which is a first terminal and includes a memory 1710, a transceiver 1720 and a processor 1700;
the memory 1710 is configured to store a computer program; the transceiver 1720 is configured to receive and send data under the control of the processor; the processor 1700 is configured to read the computer program in the memory to perform the following operations:
sending a trigger signaling to at least one first device, wherein the trigger signaling includes one or more of followings:
a first trigger signaling, used to instruct the first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
performing measurement positioning according to the sent trigger signaling.

Optionally, in the terminal, in the case that the trigger signaling includes the first trigger signaling, the processor 1700 is further configured to:
send the first SL-PRS to the at least one first device according to the first trigger signaling;
receive the first measurement information reported by the at least one first device after measuring the first SL-PRS.

Optionally, in the terminal, in the case that the trigger signaling includes the second trigger signaling, the processor 1700 is further configured to:
receive the second SL-PRS sent by the at least one first device;
obtain second measurement information by measuring the second SL-PRS.

Optionally, in the terminal, the processor 1700 performing the measurement positioning according to the sent trigger signaling includes:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

Optionally, in the terminal, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the terminal, the second measurement information includes one or more of following information:
an AOA of the second SL-PRS;
time difference between time for sending the first SL-PRS and time for receiving the second SL-PRS;
time difference between times for receiving the second SL-PRS by respective different antenna panels.

Optionally, in the terminal, before sending the trigger signaling, the processor 1700 is further configured to:
send a positioning request message to the at least one first device;
receive a positioning response message sent by the at least one first device.

Optionally, in the terminal, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the terminal, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the terminal, the positioning request message includes one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

Optionally, in the terminal, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, in the terminal, after performing the measurement positioning, the processor 1700 is further configured to:
obtain relative position information between the first terminal and the at least one first device;
report the relative position information to the at least one first device and/or a positioning server.

Optionally, in the terminal, the processor 1700 is further configured to:
perform Downlink Positioning Reference Signal (DL-PRS) measurement according to first indication information sent by a positioning server, to obtain third measurement information;
report the third measurement information and the first measurement information to the positioning server; or report the third measurement information and the second measurement information to the positioning server.

Optionally, in the terminal, the processor 1700 is further configured to:
receive second indication information sent by the positioning server; the second indication information includes one or more of following information:
an absolute position of the first terminal;
an absolute position of the at least one first device;
a relative position between the first terminal and the at least one first device.

Optionally, in the terminal, the processor 1700 is further configured to:
perform Downlink Positioning Reference Signal (DL-PRS) measurement according to first indication information sent by a positioning server, to obtain third measurement information;
obtain an absolute position of the first terminal according to an absolute position of at least one network device and the third measurement information;
report the absolute position of the first terminal to the positioning server.

Optionally, in the terminal, the processor 1700 is further configured to:
send a Sounding Reference Signal (SRS) according to a third trigger signaling of a network device;
acquire fourth measurement information, wherein the fourth measurement information is obtained by the network device through measuring the SRS;
obtain an absolute position of the first terminal according to the fourth measurement information and an absolute position of the network device.

Optionally, in the terminal, the processor 1700 is further configured to:
receive resource configuration information of the first SL-PRS and/or resource configuration information of the second SL-PRS sent by a positioning server.

Optionally, in the terminal, in the case that the at least one first device includes a Road Side Unit (RSU), the processor 1700 is further configured to:
receive position information sent by the RSU;
after performing the measurement positioning according to the trigger signaling, the processor 1700 is further configured to:
   determine an absolute position of the first terminal according to a positioning result of the measurement positioning.

Optionally, in the terminal, the processor 1700 is further configured to:
send a deactivation signaling to the at least one first device;
wherein in the case that the trigger signaling includes the first trigger signaling, the deactivation signaling is used to deactivate transmission of the first SL-PRS;
in the case that the trigger signaling includes the second trigger signaling, the deactivation signaling is used to deactivate transmission of the second SL-PRS.

In Fig. 17, the bus architecture may include any number of interconnected buses and bridges, and connects various circuits including one or more processors represented by the processor 1700 and the memory represented by the memory 1710. The bus architecture can also link together various other circuits such as peripherals, voltage regulators, and power management circuits, which are all well known in the art and therefore will not be described further herein. The bus interface provides the interface. The transceiver 1720 may be a plurality of elements, including a transmitter and a receiver, to allow for communication with various other apparatuses on the transmission medium. The transmission medium includes wireless channels, wired channels, optical cables, and other transmission media. For different user equipments, the user interface 1730 can also be an interface capable of externally or internally connecting a required device. The connected device includes but is not limited to a keypad, a display, a speaker, a microphone, a joystick, etc.

The processor 1700 is responsible for managing the bus architecture and general processing, and the memory 1710 can store data used by the processor 1700 when performing operations.

The processor 1700 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

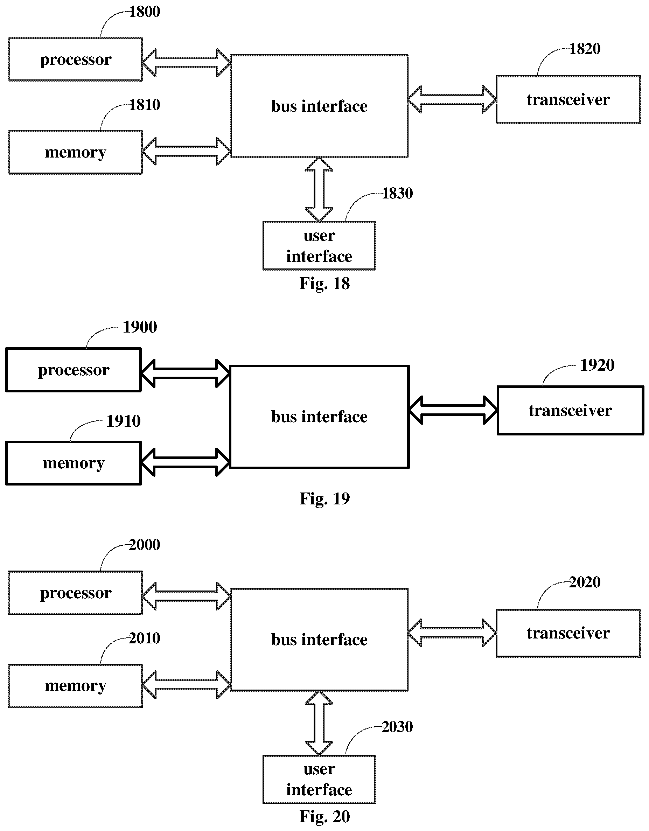

As shown in Fig. 18, an embodiment of the present disclosure also provides a network device, which is a first device, optionally a terminal or an RSU, and includes a memory 1810, a transceiver 1820 and a processor 1800;
the memory 1810 is configured to store a computer program; the transceiver 1820 is configured to receive and send data under the control of the processor; the processor 1800 is configured to read the computer program in the memory and perform the following operations: receiving a trigger signaling sent by a first terminal, wherein the trigger signaling includes one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

Optionally, in the network device, in the case that the trigger signaling includes the first trigger signaling, the processor 1800 is further configured to:
receive the first SL-PRS sent by the first terminal;
report the first measurement information to the first terminal and/or a positioning server after measuring the first SL-PRS.

Optionally, in the network device, in the case that the trigger signaling includes the second trigger signaling, the processor 1800 is further configured to:
send the second SL-PRS to the first terminal according to the second trigger signaling.

Optionally, in the network device, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the network device, before receiving the trigger signaling, the processor 1800 is further configured to:
receive a positioning request message sent by the first terminal;
send a positioning response message to the first terminal according to the positioning request message.

Optionally, in the network device, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the network device, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the network device, the positioning request message includes one or more of following information:
terminal information of the first terminal;
measurement information that needs to report;
resource configuration information of the first SL-PRS;
beam angle information of the first SL-PRS;
resource configuration information of the second SL-PRS;
beam angle information of the second SL-PRS;
a reporting mode to report the measurement information;
a measurement capability of the first terminal;
a reporting request of a measurement information type supported by the first terminal.

Optionally, in the network device, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, in the network device, the processor 1800 is further configured to:
obtain relative position information sent by the first terminal; wherein the relative position information indicates a relative position between the first terminal and the at least one first device.

Optionally, in the network device, the processor 1800 is further configured to:
receive second indication information sent by the positioning server; the second indication information includes one or more of following information:
an absolute position of the first terminal;
an absolute position of the at least one first device;
a relative position between the first terminal and the at least one first device.

Optionally, in the network device, the processor 1800 is further configured to:
receive resource configuration information of the first SL-PRS and/or resource configuration information of the second SL-PRS sent by a positioning server.

Optionally, in the network device, in the case that the first device is a Road Side Unit (RSU), the processor 1800 is further configured to:
send position information of the RSU to the first terminal.

In Fig. 18, the bus architecture may include any number of interconnected buses and bridges, and connects various circuits including one or more processors represented by the processor 1800 and the memory represented by the memory 1810. The bus architecture can also link together various other circuits such as peripherals, voltage regulators, and power management circuits, which are all well known in the art and therefore will not be described further herein. The bus interface provides the interface. The transceiver 1820 may be a plurality of elements, including a transmitter and a receiver, to allow for communication with various other apparatuses on the transmission medium. The transmission medium includes wireless channels, wired channels, optical cables, and other transmission media. For different user equipments, the user interface 1830 can also be an interface capable of externally or internally connecting a required device. The connected device includes but is not limited to a keypad, a display, a speaker, a microphone, a joystick, etc.

The processor 1800 is responsible for managing the bus architecture and general processing, and the memory 1810 can store data used by the processor 1800 when performing operations.

Optionally, the processor 1800 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

As shown in Fig. 19, an embodiment of the present disclosure also provides a positioning server, which includes a memory 1910, a transceiver 1920 and a processor 1900;
the memory 1910 is configured to store a computer program; the transceiver 1920 is configured to receive and send data under the control of the processor; the processor 1900 is configured to read the computer program in the memory and perform the following operations: receiving first information sent by at least one first terminal, the first information including one or more of following information:
a relative position between the first terminal and at least one first device;
an absolute position of the first terminal;
measurement information reported by the first terminal after receiving the SL-PRS.

Optionally, in the positioning server, the processor 1900 is further configured to:
send the first information to the at least one first device.

Optionally, in the positioning server, in the case that the first information includes the measurement information, the processor 1900 is further configured to:
calculate the absolute position of the first terminal according to the measurement information;
send the calculated absolute position to the first terminal and/or the at least one first device.

Optionally, in the positioning server, the processor 1900 is further configured to:
send resource configuration information of the SL-PRS to the first terminal.

Optionally, in the positioning server, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

In Fig. 19, the bus architecture may include any number of interconnected buses and bridges, and connects various circuits including one or more processors represented by the processor 1900 and the memory represented by the memory 1910. The bus architecture can also link together various other circuits such as peripherals, voltage regulators, and power management circuits, which are all well known in the art and therefore will not be described further herein. The bus interface provides the interface. The transceiver 1920 may be a plurality of elements, including a transmitter and a receiver, to allow for communication with various other apparatuses on the transmission medium. The transmission medium includes wireless channels, wired channels, optical cables, and other transmission media. The processor 1900 is responsible for managing the bus architecture and general processing, and the memory 1910 can store data used by the processor 1900 when performing operations.

The processor 1900 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

As shown in Fig. 20, an embodiment of the present disclosure also provides a terminal, which is a first terminal, and includes a memory 2010, a transceiver 2020 and a processor 2000; the memory 2010 is configured to store a computer program; the transceiver 2020 is configured to receive and send data under the control of the processor; the processor 2000 is configured to read the computer program in the memory and perform the following operations:
sending a trigger signaling to at least one first device, wherein the trigger signaling includes one or more of followings:
a first trigger signaling, used to instruct the first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
performing measurement positioning according to the sent trigger signaling.

Optionally, in the terminal, in the case that the first information includes the measurement information, the processor 2000 is further configured to:
receive the absolute position of the first terminal calculated by the positioning server according to the measurement information.

Optionally, in the terminal, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

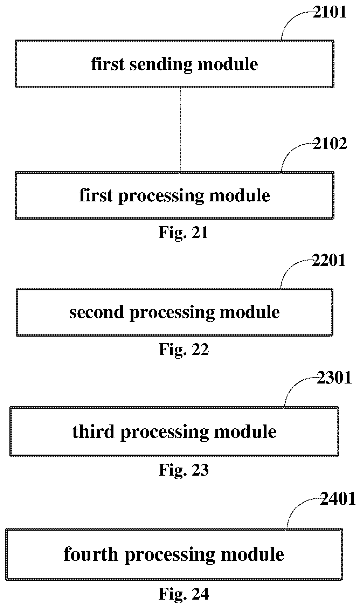

As shown in Fig. 21, the embodiment of the present disclosure also provides a positioning apparatus, which is applied to a first terminal, and includes:
a first sending module 2101, configured to send a trigger signaling to at least one first device, the trigger signaling including one or more of followings:
a first trigger signaling, used to instruct a first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
a first processing module 2102, configured to perform measurement positioning according to the sent trigger signaling.

Optionally, in the positioning apparatus, in the case that the trigger signaling includes the first trigger signaling, a first sending module 2101 is further configured to:
send the first SL-PRS to the at least one first device according to the first trigger signaling;
receive first measurement information reported by the at least one first device after measuring the first SL-PRS.

Optionally, in the positioning apparatus, in the case that the trigger signaling includes the second trigger signaling, a first sending module 2101 is further configured to:
receive the second SL-PRS sent by the at least one first device;
obtain second measurement information by measuring the second SL-PRS.

Optionally, in the positioning apparatus, the first processing module 2102 performing measurement positioning according to the sent trigger signaling, includes:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

Optionally, in the positioning apparatus, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the positioning apparatus, the second measurement information includes one or more of following information:
an AOA of the second SL-PRS;
time difference between time for sending the first SL-PRS and time for receiving the second SL-PRS;
time difference between times for receiving the second SL-PRS by respective different antenna panels.

Optionally, in the positioning apparatus, before sending the trigger signaling, the first processing module 2102 is further configured to:
send a positioning request message to the at least one first device;
receive a positioning response message sent by the at least one first device.

Optionally, in the positioning apparatus, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the positioning apparatus, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the positioning apparatus, the positioning request message includes one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

Optionally, in the positioning apparatus, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, in the positioning apparatus, after performing measurement positioning, the first processing module 2102 is further configured to:
obtain relative position information between the first terminal and the at least one first device;
report the relative position information to the at least one first device and/or a positioning server.

Optionally, in the positioning apparatus, the first processing module 2102 is further configured to:
perform Downlink Positioning Reference Signal (DL-PRS) measurement according to first indication information sent by a positioning server, to obtain third measurement information;
report the third measurement information and the first measurement information to the positioning server; or report the third measurement information and the second measurement information to the positioning server.

Optionally, in the positioning apparatus, the first processing module 2102 is further configured to:
receive second indication information sent by the positioning server; the second indication information includes one or more of following information:
an absolute position of the first terminal;
an absolute position of the at least one first device;
a relative position between the first terminal and the at least one first device.

Optionally, in the positioning apparatus, the first processing module 2102 is further configured to:
perform Downlink Positioning Reference Signal (DL-PRS) measurement according to first indication information sent by a positioning server, to obtain third measurement information;
obtain an absolute position of the first terminal according to an absolute position of at least one network device and the third measurement information;
report the absolute position of the first terminal to the positioning server.

Optionally, in the positioning apparatus, the first processing module 2102 is further configured to:
send a Sounding Reference Signal (SRS) according to a third trigger signaling of a network device;
acquire fourth measurement information, wherein the fourth measurement information is obtained by the network device through measuring the SRS;
obtain an absolute position of the first terminal according to the fourth measurement information and an absolute position of the network device.

Optionally, in the positioning apparatus, the first processing module 2102 is further configured to:
receive resource configuration information of the first SL-PRS and/or resource configuration information of the second SL-PRS sent by a positioning server.

Optionally, in the positioning apparatus, in the case that the at least one first device includes a Road Side Unit (RSU), the first processing module 2102 is further configured to:
receive position information sent by the RSU;
after performing the measurement positioning according to the trigger signaling, the first processing module 2102 is further configured to:
   determine an absolute position of the first terminal according to a positioning result of the measurement positioning.

Optionally, in the positioning apparatus, the first processing module 2102 is further configured to:
send a deactivation signaling to the at least one first device;
wherein in the case that the trigger signaling includes the first trigger signaling, the deactivation signaling is used to deactivate transmission of the first SL-PRS;
in the case that the trigger signaling includes the second trigger signaling, the deactivation signaling is used to deactivate transmission of the second SL-PRS.

As shown in Fig. 22, the embodiment of the present disclosure also provides a positioning apparatus, which is applied to a first device and includes:
a second processing module 2201, configured to receive a trigger signaling sent by a first terminal, the trigger signaling including one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

Optionally, in the positioning apparatus, in the case that the trigger signaling includes the first trigger signaling, the second processing module 2201 is further configured to:
receive the first SL-PRS sent by the first terminal;
report the first measurement information to the first terminal and/or a positioning server after measuring the first SL-PRS.

Optionally, in the positioning apparatus, in the case that the trigger signaling includes the second trigger signaling, the method further includes:
sending the second SL-PRS to the first terminal according to the second trigger signaling.

Optionally, in the positioning apparatus, the first measurement information includes one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

Optionally, in the positioning apparatus, before receiving the trigger signaling, the second processing module 2201 is further configured to:
receive a positioning request message sent by the first terminal;
send a positioning response message to the first terminal according to the positioning request message.

Optionally, in the positioning apparatus, the first trigger signaling includes one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

Optionally, in the positioning apparatus, the second trigger signaling includes one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

Optionally, in the positioning apparatus, the positioning request message includes one or more of following information:
terminal information of the first terminal;
measurement information that needs to report;
resource configuration information of the first SL-PRS;
beam angle information of the first SL-PRS;
resource configuration information of the second SL-PRS;
beam angle information of the second SL-PRS;
a reporting mode to report the measurement information;
a measurement capability of the first terminal;
a reporting request of a measurement information type supported by the first terminal.

Optionally, in the positioning apparatus, the positioning response message includes one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

Optionally, in the positioning apparatus, the second processing module 2201 is further configured to:
obtain relative position information sent by the first terminal; wherein the relative position information indicates a relative position between the first terminal and the at least one first device.

Optionally, in the positioning apparatus, the second processing module 2201 is further configured to:
receive second indication information sent by the positioning server; the second indication information includes one or more of following information:
an absolute position of the first terminal;
an absolute position of the first device;
a relative position between the first terminal and the first device.

Optionally, in the positioning apparatus, the method further includes:
receiving the resource configuration information of the first SL-PRS, and/or the resource configuration information of the second SL-PRS sent by the positioning server.

Optionally, in the positioning apparatus, in the case that the first device is a Road Side Unit (RSU), the second processing module 2201 is further configured to:
send position information of the RSU to the first terminal.

As shown in Fig. 23, the embodiment of the present disclosure also provides a positioning apparatus, which is applied to a positioning server and includes:
a third processing module 2301, configured to receive first information sent by at least one first terminal, the first information including one or more of following information:
a relative position between the first terminal and the at least one first device.
an absolute position of the first terminal;
measurement information reported by the first terminal after receiving the SL-PRS.

Optionally, in the positioning apparatus, the third processing module 2301 is further configured to:
send the first information to the at least one first device.

Optionally, in the positioning apparatus, in the case that the first information includes the measurement information, the third processing module 2301 is further configured to:
calculate the absolute position of the first terminal according to the measurement information;
send the calculated absolute position to the first terminal and/or the at least one first device.

Optionally, in the positioning apparatus, the third processing module 2301 is further configured to:
send resource configuration information of the SL-PRS to the first terminal.

Optionally, in the positioning apparatus, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

As shown in Fig. 24, the embodiment of the present disclosure also provides a positioning apparatus, which is applied to a first terminal and includes:
a fourth processing module 2401, configured to send first information to a positioning server, wherein the first information includes one or more of following information:
a relative position between the first terminal and at least one first device;
an absolute position of the first terminal;
measurement information reported by the first terminal after receiving the SL-PRS.

In the case that the first information includes the measurement information, the fourth processing module 2401 is further configured to:
receive the absolute position of the first terminal calculated by the positioning server according to the measurement information.

Optionally, in the positioning apparatus, the measurement information includes one or more of following information:
Reference Signal Received Power (RSRP) of the SL-PRS;
an Angle Of Arrival (AOA) of the SL-PRS;
an Angle Of Departure (AOD) of the SL-PRS;
time difference between the SL-PRS and received SL-PRS;
Reference Signal Time Difference (RSTD) of the SL-PRS.

It should be noted that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

An embodiment of the present disclosure also provides a processor-readable storage medium. The processor-readable storage medium stores a computer program. The computer program is used to cause the processor to execute any of the methods described above.

The processor-readable storage medium may be any available media or data storage device that the processor can access, including but not limited to magnetic storage (such as floppy disks, hard disks, magnetic tapes, Magneto-Optical disks (MO) etc.), optical storage (such as CD, DVD, BD, HVD), and semiconductor memories (such as ROM, EPROM, EEPROM, non-volatile memory (NAND FLASH), Solid State Disk (SSD)), etc.

It should be understood that the division of each module above is only a division of logical functions. In actual implementation, it can be fully or partially integrated into one physical entity, or it can also be physically separated. These modules can all be implemented in the form of software called by processing elements; they can also all be implemented in the form of hardware; or some modules can be implemented in the form of software called by processing elements, and some modules can be implemented in the form of hardware. For example, a certain module can be a separate processing element, or it can be integrated and implemented in a chip of the above-mentioned device. In addition, it can also be stored in the memory of the above-mentioned apparatus in the form of program codes, and called by a processing element of the above-mentioned apparatus to execute the functions of the modules identified above. The implementation of other modules is similar. In addition, all or part of these modules can be integrated together or implemented independently. The processing element described here may be an integrated circuit with signal processing capabilities. During the implementation process, each step of the above method or each of the above modules can be accomplished by integrated logic circuits in the form of hardware or instructions in the form of software in the processor element.

For example, each module, unit, sub-unit or sub-module may be one or more integrated circuits configured to implement the above method, such as: one or more Application Specific Integrated Circuits (ASICs), or, one or more microprocessors (Digital Signal Processors, DSPs), or one or more Field Programmable Gate Arrays (FPGAs). For another example, when one of the above modules is implemented in the form of a processing element calling program codes, the processing element can be a general-purpose processor, such as a Central Processing Unit (CPU) or other processors that can call the program codes. For another example, these modules can be integrated together and implemented in the form of a System-On-A-Chip (SOC).

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. In addition, the use of "and/or" in the specification and claims indicates at least one of the connected objects, for example, A and/or B and/or C indicates the inclusion of 7 situations, namely, A alone, B alone, C alone, both A and B exist, both B and C exist, both A and C exist, and A, B, and C all exist. Similarly, the use of "at least one of A and B" in the specification and claims should be understood to mean "A alone, B alone, or both A and B exist."

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) including computer-usable program codes.

The present disclosure has been described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow diagram flow or flows and/or block diagram block or blocks.

Obviously, those skilled in the art can make various changes and modifications to the present disclosure without departing from the spirit and scope of the disclosure. In this way, if these modifications and variations of the present disclosure fall within the scope of the claims of the present disclosure and equivalent thereof, the present disclosure is also intended to include these modifications and variations.

## Claims

1. A positioning method, performed by a first terminal, comprising:
sending a trigger signaling to at least one first device, wherein the trigger signaling comprises one or more of followings:
a first trigger signaling, used to instruct the first terminal to send a first Sidelink Positioning Reference Signal (SL-PRS), and/or used to instruct the at least one first device to receive the first SL-PRS and report first measurement information corresponding to the first SL-PRS;
a second trigger signaling, used to instruct the at least one first device to send a second SL-PRS;
performing measurement positioning according to the sent trigger signaling.

2. The positioning method according to claim 1, wherein in the case that the trigger signaling comprises the first trigger signaling, the method further comprises:
sending the first SL-PRS to the at least one first device according to the first trigger signaling;
receiving the first measurement information reported by the at least one first device after measuring the first SL-PRS.

3. The positioning method according to claim 1, wherein in the case that the trigger signaling comprises the second trigger signaling, the method further comprises:
receiving the second SL-PRS sent by the at least one first device;
obtaining second measurement information by measuring the second SL-PRS.

4. The positioning method according to any one of claims 1 to 3, wherein the performing the measurement positioning according to the sent trigger signaling comprises:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

5. The positioning method according to claim 1 or 2, wherein the first measurement information comprises one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

6. The positioning method according to claim 3, wherein the second measurement information comprises one or more of following information:
an AOA of the second SL-PRS;
time difference between time for sending the first SL-PRS and time for receiving the second SL-PRS;
time difference between times for receiving the second SL-PRS by respective different antenna panels.

7. The positioning method according to claim 1, wherein before sending the trigger signaling, the positioning method further comprises:
sending a positioning request message to the at least one first device;
receiving a positioning response message sent by the at least one first device.

8. The positioning method according to claim 1, wherein the first trigger signaling comprises one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

9. The positioning method according to claim 1, wherein the second trigger signaling comprises one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

10. The positioning method according to claim 7, wherein the positioning request message comprises one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

11. The positioning method according to claim 7, wherein the positioning response message comprises one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

12. The positioning method according to claim 1, wherein after performing the measurement positioning, the positioning method further comprises:
obtaining relative position information between the first terminal and the at least one first device;
reporting the relative position information to the at least one first device and/or a positioning server.

13. The positioning method according to claim 4, further comprising:
performing Downlink Positioning Reference Signal (DL-PRS) measurement according to first indication information sent by a positioning server, to obtain third measurement information;
reporting the third measurement information and the first measurement information to the positioning server; or reporting the third measurement information and the second measurement information to the positioning server.

14. The positioning method according to claim 1 or 12, further comprising:
performing Downlink Positioning Reference Signal (DL-PRS) measurement according to first indication information sent by a positioning server, to obtain third measurement information;
obtaining an absolute position of the first terminal according to an absolute position of at least one network device and the third measurement information;
reporting the absolute position of the first terminal to the positioning server.

15. The positioning method according to claim 1 or 12, further comprising:
sending a Sounding Reference Signal (SRS) according to a third trigger signaling of a network device;
acquiring fourth measurement information, wherein the fourth measurement information is obtained by the network device through measuring the SRS;
obtaining an absolute position of the first terminal according to the fourth measurement information and an absolute position of the network device.

16. The positioning method according to claim 1, further comprising:
receiving resource configuration information of the first SL-PRS and/or resource configuration information of the second SL-PRS sent by a positioning server.

17. The positioning method according to claim 1, wherein in the case that the at least one first device comprises a Road Side Unit (RSU), the method further comprises:
receiving position information sent by the RSU;
after performing the measurement positioning according to the trigger signaling, the positioning method further comprises:
determining an absolute position of the first terminal according to a positioning result of the measurement positioning.

18. The positioning method according to claim 1, further comprising:
sending a deactivation signaling to the at least one first device;
wherein in the case that the trigger signaling comprises the first trigger signaling, the deactivation signaling is used to deactivate transmission of the first SL-PRS;
in the case that the trigger signaling comprises the second trigger signaling, the deactivation signaling is used to deactivate transmission of the second SL-PRS.

19. A positioning method, performed by a first device, comprising:
receiving a trigger signaling sent by a first terminal, wherein the trigger signaling comprises one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

20. The positioning method according to claim 19, wherein in the case that the trigger signaling comprises the first trigger signaling, the method further comprises:
receiving the first SL-PRS sent by the first terminal;
reporting the first measurement information to the first terminal and/or a positioning server after measuring the first SL-PRS.

21. The positioning method according to claim 19, wherein in the case that the trigger signaling comprises the second trigger signaling, the method further comprises:
sending the second SL-PRS to the first terminal according to the second trigger signaling.

22. The positioning method according to claim 19 or 20, wherein the first measurement information comprises one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

23. The positioning method according to claim 19, wherein before receiving the trigger signaling, the positioning method further comprises:
receiving a positioning request message sent by the first terminal;
sending a positioning response message to the first terminal according to the positioning request message.

24. The positioning method according to claim 19, further comprising:
obtaining relative position information sent by the first terminal, wherein the relative position information indicates a relative position between the first terminal and the at least one first device.

25. The positioning method according to claim 19, further comprising:
receiving resource configuration information of the first SL-PRS and/or resource configuration information of the second SL-PRS sent by a positioning server.

26. The positioning method according to claim 19, wherein in the case that the first device is a Road Side Unit (RSU), the positioning method further comprises:
sending position information of the RSU to the first terminal.

27. A terminal, wherein the terminal is a first terminal, and comprises a memory, a transceiver, and a processor;
wherein the memory is configured to store a computer program; the transceiver is configured to receive and send data under the control of the processor; the processor is configured to read the computer program in the memory to:
send a trigger signaling to at least one first device, wherein the trigger signaling comprises one or more of followings:
a first trigger signaling, used to instruct the first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
perform measurement positioning according to the sent trigger signaling.

28. The terminal according to claim 27, wherein in the case that the trigger signaling comprises the first trigger signaling, the processor is further configured to:
send the first SL-PRS to the at least one first device according to the first trigger signaling;
receive the first measurement information reported by the at least one first device after measuring the first SL-PRS.

29. The terminal according to claim 27, wherein in the case that the trigger signaling comprises the second trigger signaling, the processor is further configured to:
receive the second SL-PRS sent by the at least one first device;
obtain second measurement information by measuring the second SL-PRS.

30. The terminal according to any one of claims 27 to 29, wherein the processor performing the measurement positioning according to the sent trigger signaling comprises:
performing the measurement positioning according to one or more of following information obtained after sending the trigger signaling:
the first measurement information that is reported by the at least one first device after the first terminal sends the first SL-PRS to the at least one first device and the at least one first device measures the first SL-PRS;
the second measurement information obtained by measuring the second SL-PRS after receiving the second SL-PRS sent by the at least one first device.

31. The terminal according to claim 27 or 28, wherein the first measurement information comprises one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

32. The terminal according to claim 29, wherein the second measurement information comprises one or more of following information:
an AOA of the second SL-PRS;
time difference between time for sending the first SL-PRS and time for receiving the second SL-PRS;
time difference between times for receiving the second SL-PRS by respective different antenna panels.

33. The terminal according to claim 27, wherein before sending the trigger signaling, the processor is further configured to:
send a positioning request message to the at least one first device;
receive a positioning response message sent by the at least one first device.

34. The terminal according to claim 27, wherein the first trigger signaling comprises one or more of following information:
terminal information of the first terminal;
device information of the at least one first device;
measurement information that the at least one first device needs to report;
a reporting mode for the at least one first device to report the measurement information;
resource configuration information of the first SL-PRS;
time for sending the first SL-PRS;
time when the at least one first device reports the measurement information.

35. The terminal according to claim 27, wherein the second trigger signaling comprises one or more of following information:
terminal information of the first terminal;
device information of the at least one first device;
measurement information that the first terminal needs to report;
a reporting mode for the first terminal to report the measurement information;
resource configuration information of the second SL-PRS;
time when the first terminal reports the measurement information.

36. The terminal according to claim 33, wherein the positioning request message comprises one or more of following information:
terminal information of the first terminal;
measurement information that the at least one first device needs to report;
resource configuration information of the first SL-PRS;
beam angle information of the first SL-PRS;
resource configuration information of the second SL-PRS;
beam angle information of the second SL-PRS;
a reporting mode for the at least one first device to report the measurement information;
a measurement capability of the first terminal;
a reporting request of a measurement information type supported by the first terminal.

37. The terminal according to claim 33, wherein the positioning response message comprises one or more of following information:
a resource set of the second SL-PRS;
resource configuration information of the second SL-PRS;
device information of the at least one first device;
beam angle information of the second SL-PRS;
a measurement capability of the at least one first device;
a measurement information type supported by the at least one first device.

38. The terminal according to claim 27, wherein after performing the measurement positioning, the processor is further configured to:
obtain relative position information between the first terminal and the at least one first device;
report the relative position information to the at least one first device and/or a positioning server.

39. The terminal according to claim 30, wherein the processor is further configured to:
perform Downlink Positioning Reference Signal (DL-PRS) measurement according to first indication information sent by a positioning server, to obtain third measurement information;
report the third measurement information and the first measurement information to the positioning server; or report the third measurement information and the second measurement information to the positioning server.

40. The terminal according to claim 38, wherein the processor is further configured to:
receive second indication information sent by the positioning server; the second indication information comprises one or more of following information:
an absolute position of the first terminal;
an absolute position of the at least one first device;
a relative position between the first terminal and the at least one first device.

41. The terminal according to claim 27 or 38, wherein the processor is further configured to:
perform Downlink Positioning Reference Signal (DL-PRS) measurement according to first indication information sent by a positioning server, to obtain third measurement information;
obtain an absolute position of the first terminal according to an absolute position of at least one network device and the third measurement information;
report the absolute position of the first terminal to the positioning server.

42. The terminal according to claim 27 or 38, wherein the processor is further configured to:
send a Sounding Reference Signal (SRS) according to a third trigger signaling of a network device;
acquire fourth measurement information, wherein the fourth measurement information is obtained by the network device through measuring the SRS;
obtain an absolute position of the first terminal according to the fourth measurement information and an absolute position of the network device.

43. The terminal according to claim 27, wherein the processor is further configured to:
receive resource configuration information of the first SL-PRS and/or resource configuration information of the second SL-PRS sent by a positioning server.

44. The terminal according to claim 27, wherein in the case that the at least one first device comprises a Road Side Unit (RSU), the processor is further configured to:
receive position information sent by the RSU;
after performing the measurement positioning according to the trigger signaling, the processor is further configured to:
determine an absolute position of the first terminal according to a positioning result of the measurement positioning.

45. The terminal according to claim 27, wherein the processor is further configured to:
send a deactivation signaling to the at least one first device;
wherein in the case that the trigger signaling comprises the first trigger signaling, the deactivation signaling is used to deactivate transmission of the first SL-PRS;
in the case that the trigger signaling comprises the second trigger signaling, the deactivation signaling is used to deactivate transmission of the second SL-PRS.

46. A network device, wherein the network device is a first device, and comprises a memory, a transceiver, and a processor;
wherein the memory is configured to store a computer program; the transceiver is configured to receive and send data under the control of the processor; the processor is configured to read the computer program in the memory to:
receive a trigger signaling sent by a first terminal, wherein the trigger signaling comprises one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

47. The network device according to claim 46, wherein in the case that the trigger signaling comprises the first trigger signaling, the processor is further configured to:
receive the first SL-PRS sent by the first terminal;
report the first measurement information to the first terminal and/or a positioning server after measuring the first SL-PRS.

48. The network device according to claim 46, wherein in the case that the trigger signaling comprises the second trigger signaling, the processor is further configured to:
send the second SL-PRS to the first terminal according to the second trigger signaling.

49. The network device according to claim 46 or 47, wherein the first measurement information comprises one or more of following information:
Reference Signal Received Power (RSRP) of the first SL-PRS;
a first Reference Signal Received Power Path (RSRPP) of the first SL-PRS;
an Angle Of Arrival (AOA) of the first SL-PRS;
an Angle Of Departure (AOD) of the first SL-PRS;
time difference between time for sending the second SL-PRS and time for receiving the first SL-PRS;
Reference Signal Time Difference (RSTD) of the first SL-PRS.

50. The network device according to claim 46, wherein before receiving the trigger signaling, the processor is further configured to:
receive a positioning request message sent by the first terminal;
send a positioning response message to the first terminal according to the positioning request message.

51. The network device according to claim 46, wherein the processor is further configured to:
obtain relative position information sent by the first terminal, wherein the relative position information indicates a relative position between the first terminal and the at least one first device.

52. The network device according to claim 46, wherein the processor is further configured to:
receive second indication information sent by the positioning server; the second indication information comprises one or more of following information:
an absolute position of the first terminal;
an absolute position of the first device;
a relative position between the first terminal and the first device.

53. The network device according to claim 46, wherein the processor is further configured to:
receive resource configuration information of the first SL-PRS and/or resource configuration information of the second SL-PRS sent by a positioning server.

54. The network device according to claim 46, wherein in the case that the first device is a Road Side Unit (RSU), the processor is further configured to:
send position information of the RSU to the first terminal.

55. A positioning apparatus, comprising:
a first sending module, configured to send a trigger signaling to at least one first device, the trigger signaling comprising one or more of followings:
a first trigger signaling, used to instruct a first terminal to send a first Sidelink Positioning Reference Signal (SL-PRS), and/or used to instruct the at least one first device to receive the first SL-PRS and report first measurement information of the first SL-PRS;
a second trigger signaling, used to instruct the at least one first device to send a second SL-PRS;
a first processing module, configured to perform measurement positioning according to the sent trigger signaling.

56. A positioning apparatus, comprising:
a second processing module, configured to receive a trigger signaling sent by a first terminal, the trigger signaling comprising one or more of followings:
a first trigger signaling, used to instruct the first terminal to send a first Sidelink Positioning Reference Signal (SL-PRS), and/or used to instruct at least one first device to receive the first SL-PRS and report first measurement information of the first SL-PRS;
a second trigger signaling, used to instruct the at least one first device to send a second SL-PRS.

57. A processor-readable storage medium storing a computer program, wherein the computer program is used to cause a processor to execute the method according to any one of claims 1 to 26.
